# EUROPEAN PATENT APPLICATION

(11) **EP 4 780 063 A1**
(43) Date of publication of application: **22.07.2026**
(21) Application number: 24865658.9
(22) Date of filing: 19.07.2024
(51) Int. Cl.: H04W 28/088, H04W 28/084, H04W 24/08, H04L 43/0876, H04L 47/125

(54) **APPARATUS AND METHOD FOR CONTROLLING OVERLOAD OF ENTITY BY USING LOAD INFORMATION**

(30) Priority: 15.09.2023 KR 20230123513
(71) Applicant: Samsung Electronics Co., Ltd., Suwon-si, Gyeonggi-do 16677 (KR)
(72) Inventor: KIM, Bokkeun, Suwon-si Gyeonggi-do 16677 (KR); KIM, Mihean, Suwon-si Gyeonggi-do 16677 (KR); KIM, Jin, Suwon-si Gyeonggi-do 16677 (KR); CHO, Yunyoung, Suwon-si Gyeonggi-do 16677 (KR); CHOI, Yunyoung, Suwon-si Gyeonggi-do 16677 (KR); CHOI, Jaehyuk, Suwon-si Gyeonggi-do 16677 (KR)
(74) Representative: Gulde & Partner
(86) International application number: PCT/KR2024/010445
(87) International publication number: WO 2025/058215

(57) **Abstract**

The device of the first network function (NF) may comprise: a memory including instructions; a transceiver; and at least one processor. The instructions, when executed individually or collectively by the at least one processor, may cause the apparatus to: acquire load information for indicating a load of each NF in an NF group including a second NF and a third NF; determine whether each NF in the NF group is in a first state indicating an overload of the NF by using the load information; on the basis of determining that the second NF is in the first state and the third NF is in a second state, change a ratio between the second NF and the third NF for distributing a plurality of calls from the first ratio to a second ratio different from the first ratio; and on the basis of the changed second ratio, allocate, to the second NF, second calls less than first calls according to the first ratio among the plurality of calls, and allocate, to the third NF, fourth calls more than third calls according to the first ratio among the plurality of calls.

## Description

### [Technical Field]

The following descriptions relate to an apparatus and a method for controlling an overload of an entity using load information.

### [Background Art]

In a communication system, a core network may include a plurality of entities. For example, the plurality of entities may include network functions (NFs). Some entities of the plurality of entities may select other entities to provide a service.

### [Detailed Description of the Invention]

### [Technical Solution]

A device of a first network function (NF) may include memory including instructions. The device may include a transceiver. The device may include at least one processor. The instructions may be configured to, when executed by the at least one processor, cause the device to obtain load information for representing a load of each NF of a NF group including a second NF and a third NF. The instructions may be configured to, when executed by the at least one processor, cause the device to determine whether each NF of the NF group is in a first state representing an overload of the NF, using the load information. The instructions may be configured to, when executed by the at least one processor, cause the device to, based on determining that the second NF is in the first state and the third NF is in a second state different from the first state, change a ratio between the second NF and the third NF for distributing a plurality of calls from a first ratio to a second ratio different from the first ratio. The instructions may be configured to, when executed by the at least one processor, cause the device to, based on the changed second ratio, allocate second calls to the second NF, the second calls being less than first calls according to the first ratio from among the plurality of calls, and allocate fourth calls to the third NF, the fourth calls being greater than third calls according to the first ratio from among the plurality of calls.

A method performed by a device of a first network function (NF) may include obtaining load information for representing a load of each NF of a NF group including a second NF and a third NF. The method may include determining whether each NF of the NF group is in a first state representing an overload of the NF, using the load information. The method may include, based on determining that the second NF is in the first state and the third NF is in a second state different from the first state, changing a ratio between the second NF and the third NF for distributing a plurality of calls from a first ratio to a second ratio different from the first ratio. The method may include, based on the changed second ratio, allocating second calls to the second NF, the second calls being reduced from first calls to be distributed to the second NF among the plurality of calls, and allocating fourth calls to the third NF, the fourth calls being increased from third calls to be distributed to the third NF among the plurality of calls.

A non-transitory computer-readable storage medium may store one or more programs including instructions that, when executed by a processor of a device of a first network function (NF) including a transceiver, cause the device to obtain load information for representing a load of each NF of an NF group including a second NF and a third NF. The non-transitory computer-readable storage medium may store one or more programs including instructions that, when executed by the processor, cause the device to determine whether each NF of the NF group is in a first state representing an overload of the NF, using the load information. The non-transitory computer-readable storage medium may store one or more programs including instructions that, when executed by the processor, cause the device to, based on determining that the second NF is in the first state and the third NF is in a second state different from the first state, change a ratio between the second NF and the third NF for distributing a plurality of calls from a first ratio to a second ratio different from the first ratio. The non-transitory computer-readable storage medium may store one or more programs including instructions that, when executed by the processor, cause the device to, based on the changed second ratio, allocate second calls to the second NF, the second calls being reduced from first calls to be distributed to the second NF among the plurality of calls, and allocate fourth calls to the third NF, the fourth calls being increased from third calls to be distributed to the third NF among the plurality of calls.

### [Brief Description of the Drawings]

FIG. 1A illustrates an example of a communication system.
FIG. 2A illustrates an example of a functional configuration of a base station in a communication system.
FIG. 2B illustrates an example of a functional configuration of a terminal in a communication system.
FIG. 2C illustrates an example of a functional configuration of a core network entity in a communication system.
FIG. 3 illustrates an example of user plane functions (UPFs) deployed in a plurality of serving areas.
FIG. 4 illustrates an example of an operational flow for a method of controlling an overload of a network function (NF).
FIG. 5A illustrates an example of a method of controlling an overload of an NF in one serving area.
FIG. 5B illustrates an example of a method of controlling an overload of an NF in a plurality of serving areas.
FIG. 6A illustrates an example of a method of training an artificial intelligence model (AI model) based on load information of a plurality of time intervals.
FIG. 6B illustrates an example of a method of obtaining prediction load information using an artificial intelligence model.
FIG. 7A and FIG. 7B illustrate examples of graphs representing prediction load information and collected load information over time.
FIG. 8 illustrates an example of an operational flow for a method in which a first network function (NF) controls an overload of a second NF of an NF group.

### [Mode for Carrying out the Invention]

The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary among the terms used in the disclosure may be interpreted as having the same or similar meaning as those in the context of the related art, and they are not to be construed in an ideal or overly formal sense, unless explicitly defined in the disclosure. In some cases, even the terms defined in the disclosure may not be interpreted to exclude embodiments of the disclosure.

In various examples of the disclosure described below, a hardware approach will be described as an example. However, since various embodiments of the disclosure may include a technology that utilizes both the hardware-based approach and the software-based approach, the various embodiments are not intended to exclude the software-based approach.

As used in the following description, terms referring to signals (e.g., packet, message, signal, information, signaling), terms referring to network entities (e.g., entity, network function (NF), node, NF group, entity group), terms for operational states (e.g., step, operation, procedure), terms referring to data (e.g., packet, message, user stream, information, bit, symbol, codeword), terms referring to channels, terms referring to components of an apparatus and so on are provided as examples for convenience of explanation. Accordingly, the disclosure is not limited to the terms described below, and other terms having the equivalent technical meaning thereto may be interchangeably used. Further, as used herein, the terms such as e.g., '~ portion', '~ er/or', '~ unit/module', '~ body', or the like may refer to at least one shape of structure or a unit for processing a certain function.

In addition, throughout the disclosure, an expression such as e.g., 'greater than' or 'less than' may be used to determine whether a specific condition is satisfied or fulfilled, but it is merely a description for expressing an example and is not intended to exclude the meaning of 'greater than or equal to' or 'less than or equal to'. A condition described as 'greater than or equal to' may be replaced with an expression such as 'greater than', a condition described as 'less than or equal to' may be replaced with an expression such as 'less than', and a condition described as 'greater than or equal to and less than' may be replaced with 'greater than and less than or equal to', respectively. Further, hereinafter, 'A' to 'B' means at least one of the elements from A (including A) to B (including B). Hereinafter, 'C' and/or 'D' means including at least one of 'C' or 'D', that is, {'C', 'D', or 'C' and 'D'}.

The disclosure describes various embodiments using terms used in some communication standards (e.g., 3GPP (3rd Generation Partnership Project), xRAN (extensible radio access network), O-RAN (open radio access network)), but it is only an example for description. Various embodiments of the disclosure may be easily modified and applied to other communication systems.

For example, in a communication system (e.g., LTE or 5G), a GW-C (gateway-control plane) (or SMF (session management function), NRF (network repository function)) may select a GW-U (gateway-user plane) (or UPF (user plane function)) for processing a user plane. At this time, the GW-C (or SMF, NRF) may select the GW-U (or UPF) in consideration of location information, service, or capacity of the GW-U (or UPF). As edge computing technology is utilized, the GW-U (or UPF) may be gradually miniaturized and distributed and deployed in the vicinity of a base station. A network having the deployment as described above may be referred to as a distributed network. The distributed network has an effect of reducing a delay time and improving service quality by reducing a distance between a base station and a GW-U (or UPF), which is an entity for processing a user plane. However, the distributed network has a complex structure in that a plurality of miniaturized entities (e.g., GW-U or UPF) are required, and the capacity of the entity is relatively small in a specific area (or region), thereby causing an overload of the entity. Hereinafter, various embodiments of the disclosure propose a method of detecting an overload of an entity using load information (or load data) of entities in a specific area, and reducing the overload via an entity in the specific area or another area in case that an overload of a specific entity among those entities is detected.

Hereinafter, in the disclosure, the entity may be referred to as indicating a component of a network (e.g., RAN (radio access network) or core network). For example, the entity may be referred to as an NF (network function) or a node. The overload may represent a state in which traffic (or load) of the entity is greater than or equal to a certain level, based on a comparison between at least some of parameters in the load information of the entity and a reference value (or reference level) according to the at least some parameters. Hereinafter, the state representing the overload may be referred to as a first state. A state that is not the overload (i.e., a state in which the traffic is less than the certain level) may be referred to as a second state.

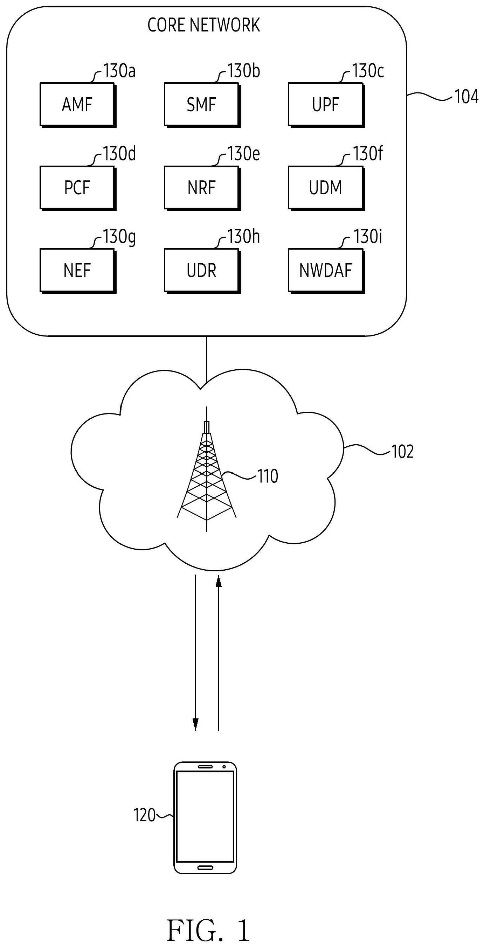

FIG. 1 illustrates an example of a communication system.

Referring to FIG. 1, the communication system may include a radio access network (RAN) 102 and a core network (CN) 104.

The radio access network 102, which is a network directly connected to a terminal 120, is an infrastructure that provides wireless access to the terminal 120. The radio access network 102 includes a set of a plurality of base stations including a base station 110, and the plurality of base stations may perform communications via interfaces established therebetween. At least some of the interfaces between the plurality of base stations may be wired or wireless.

The base station 110 may have a structure separated into a central unit (CU) and a distributed unit (DU). In such a case, a single CU may control a plurality of DUs. The base station 110 may be referred to as 'access point (AP)', 'next generation node B (gNB)', '5th generation node (5G node)', 'wireless point', 'transmission/reception point (TRP)', or other terms having equivalent technical meanings, in addition to a base station. The terminal 120 may access the radio access network 102 and perform communication with the base station 110 via a wireless channel. The terminal 120 may be referred to as 'user equipment (UE)', 'mobile station', 'subscriber station', 'remote terminal', 'wireless terminal', or 'user device', or other terms having equivalent technical meanings, in addition to a terminal.

The core network 104, as a network managing the overall system, may control the radio access network 102 and process data and control signals for the terminal 120 transmitted/received via the radio access network 102. The core network 104 may perform various functions such as control of a user plane and a control plane, processing of mobility, management of subscriber information, charging, and interworking with other types of systems (e.g., a long term evolution (LTE) system).

In order to perform the various functions described above, the core network 104 may include a plurality of functionally separated entities having different network functions (NFs). The entity may be referred to as an NF or a node. For example, the core network 104 may include an access and mobility management function (AMF) 130a, a session management function (SMF) 130b, a user plane function (UPF) 130c, a policy and charging function (PCF) 130d, a network repository function (NRF) 130e, a user data management (UDM) 130f, a network exposure function (NEF) 130g, a unified data repository (UDR) 130h, or a network data analytics function (NWDAF) 130i. However, embodiments of the disclosure are not limited thereto. For example, the core network 104 may further include other NFs, or may omit at least one of the NFs illustrated in FIG. 1.

For example, each of the entities of the core network 104 in FIG. 1 is illustrated as independently existing entities, but the embodiments of the disclosure are not limited thereto. For example, a specific NF may be included in another NF. For example, the SMF 130b may include the NWDAF 130i. The NWDAF 130i included in the SMF 130b may be composed of hardware, software, or a combination of hardware and software performing the functions of the NWDAF 130i.

The terminal 120 may be connected to the radio access network 102 to access the AMF 130a performing a mobility management function of the core network 104. The AMF 130a may perform access to the radio access network 102 and mobility management of the terminal 120. The SMF 130b may manage a session. The AMF 130a may be connected to the SMF 130b, and the AMF 130a may route a session-related message for the terminal 120 to the SMF 130b. The SMF 130b may connect with the UPF 130c to allocate resources of a user plane to be provided to the terminal 120, and may establish a tunnel for transmitting data between the base station 110 and the UPF 130c. The PCF 130d may control information related to a policy and charging for a session used by the terminal 120. The NRF 130e may perform functions of storing information on NFs installed in a mobile communication operator network and notifying the stored information. The NRF 130e may be connected to all NFs. When starting driving in the operator network, each NF may notify the NRF 130e that the corresponding NF is being operating in the network, by registering with the NRF 130e. The UDM 130f is an NF that performs a role similar to a home subscriber server HSS of a 4G network, and may store subscription information of the terminal 120 or a context used by the terminal 120 in the network. The NEF 130g may perform a role of connecting a third party server and an NF in the 5G mobile communication system. For example, the third party server (or third party application) may be an application function AF. Further, the NEF 130g may perform a role of providing or updating data to the UDR 130h, or obtaining data. The UDR 130h may perform functions of storing subscription information of the terminal 120, storing policy information, storing data exposed to the outside, or storing information required for the third party application. Further, the UDR 130h may also perform a role of providing stored data to other NFs. The NWDAF 130i may provide collection and analysis functions of network data. For example, the NWDAF 130i may obtain data from other NFs and perform inference through analysis or learning based on the obtained data.

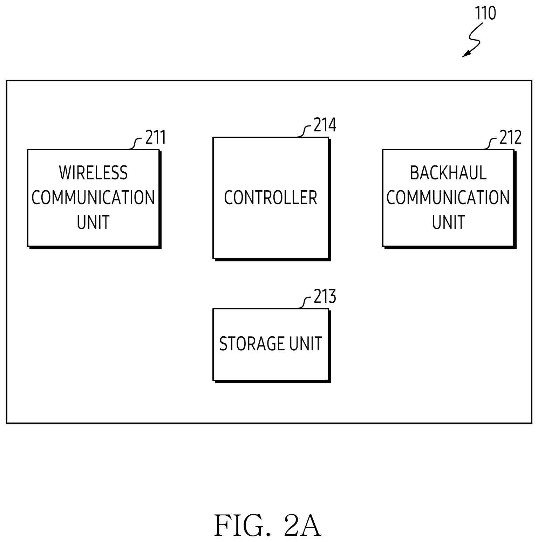

FIG. 2A illustrates an example of a functional configuration of a base station in a communication system.

The configuration illustrated in FIG. 2A may be understood as a configuration of the base station 110. Terms such as e.g., "... unit", "... er/or", etc. as used hereinafter may refer to a unit that processes at least one function or operation, and it may be implemented as hardware, software, or a combination of hardware and software.

Referring to FIG. 2A, the base station 110 may include a wireless communication unit 211, a backhaul communication unit 212, a storage unit 213, and a controller 214.

The wireless communication unit 211 performs functions for transmitting and receiving signals through a wireless channel. For example, the wireless communication unit 211 performs a conversion function between a baseband signal and a bit stream according to the physical layer specification of the system. For example, during data transmission, the wireless communication unit 211 encodes and modulates a transmission stream to generate complex symbols. Further, during data reception, the wireless communication unit 211 demodulates and decodes the baseband signal to restore a reception bit stream.

Further, the wireless communication unit 211 up-converts the baseband signal into a radio frequency (RF) band signal to transmit the converted signal via an antenna, and down-converts an RF band signal received via the antenna to a baseband signal. To this end, the wireless communication unit 211 may include a transmission filter, a reception filter, an amplifier, a mixer, an oscillator, a digital-to-analog converter (DAC), an analog-to-digital converter (ADC), and the like. Further, the wireless communication unit 211 may include a plurality of transmission/reception paths. Furthermore, the wireless communication unit 211 may include at least one antenna array including a plurality of antenna elements.

In terms of hardware, the wireless communication unit 211 may be composed of a digital unit and an analog unit, and the analog unit may be composed of a plurality of sub-units according to operating power, operating frequency, and the like. The digital unit may be implemented with at least one processor (e.g., digital signal processor DSP).

The wireless communication unit 211 transmits and receives signals as described above. Accordingly, all or part of the wireless communication unit 211 may be referred to as a 'transmitter', 'receiver', or 'transceiver'. Further, in the following description, transmission and/or reception performed over a wireless channel are used in a sense including that the processing as described above is performed by the wireless communication unit 211.

The backhaul communication unit 212 provides an interface for performing communication with other nodes in the network. That is, the backhaul communication unit 212 converts a bit stream transmitted from the base station 110 to another node, for example, another access node, another base station, a higher node, a core network, etc., into a physical signal, and converts a physical signal received from another node into a bit stream.

The storage unit 213 stores data such as a basic program, an application program, and configuration information for the operation of the base station 110. The storage unit 213 may be composed of a volatile memory, a non-volatile memory, or a combination of a volatile memory and a non-volatile memory. Further, the storage unit 213 provides stored data according to a request from the controller 214.

The controller 214 controls overall operations of the base station 110. For example, the controller 214 transmits and receives signals via the wireless communication unit 211 or via the backhaul communication unit 212. In addition, the controller 214 records and reads data in the storage unit 213. Further, the controller 214 may perform functions of a protocol stack required by a communication standard. According to another implementation example, the protocol stack may be included in the wireless communication unit 211. To this end, the controller 214 may include at least one processor. According to various embodiments, the controller 214 may control to perform synchronization using a wireless communication network. For example, the controller 214 may control the base station 110 to perform operations according to various embodiments to be described later.

For example, the at least one processor of the controller 214 may include various processing circuitry and/or a plurality of processors. For example, the term "processor" used in this document, including the claims, may include various processing circuitry including at least one processor, and one or more of the at least one processor may be configured to individually and/or collectively perform various functions described below in a distributed manner. As used hereinafter, in case that "processor," "at least one processor," and "one or more processors" are described as being configured to perform various functions, these terms encompass, for example without limitation, situations in which one processor may perform some of the functions cited and other processor(s) perform other portions of the functions cited, and also situations in which one processor may perform all of the functions cited. Additionally, the at least one processor may include a combination of processors that perform the various listed/disclosed functions, for example, in a distributed manner. The at least one processor may execute program instructions to achieve or perform various functions.

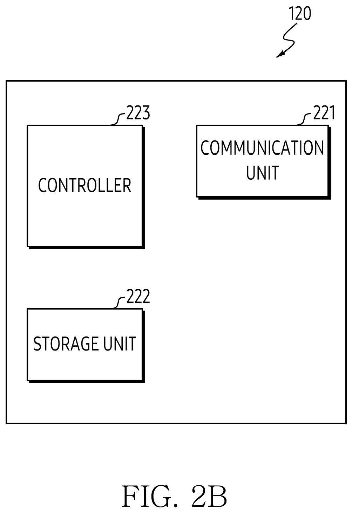

FIG. 2B illustrates an example of a functional configuration of a terminal in a communication system.

The configuration illustrated in FIG. 2B may be understood as a configuration of the terminal 120. Terms such as e.g. "... unit," "... er/or," etc. used hereinafter may mean a unit that processes at least one function or operation, and it may be implemented as hardware, software, or a combination of hardware and software.

Referring to FIG. 2B, the terminal 120 may include a communication unit 221, a storage unit 222, and a controller 223.

The communication unit 221 performs functions for transmitting and receiving signals via a wireless channel. For example, the communication unit 221 performs a conversion function between a baseband signal and a bit stream according to the physical layer standard of the system. For example, during data transmission, the communication unit 221 generates complex symbols by encoding and modulating a transmission bit stream. Further, during data reception, the communication unit 221 restores a receive bit stream by demodulating and decoding the baseband signal. Further, the communication unit 221 up-converts the baseband signal into an RF band signal to transmit the converted signal via an antenna, and down-converts an RF band signal received via the antenna into a baseband signal. For example, the communication unit 221 may include a transmission filter, a reception filter, an amplifier, a mixer, an oscillator, a DAC, an ADC, and the like.

Further, the communication unit 221 may include a plurality of transmission/reception paths. Furthermore, the communication unit 221 may include at least one antenna array including a plurality of antenna elements. In terms of hardware, the communication unit 221 may be composed of a digital circuit and an analog circuit (e.g., a radio frequency integrated circuit RFIC). Here, the digital circuit and the analog circuit may be implemented in a single package. Further, the communication unit 221 may include a plurality of RF chains. Furthermore, the communication unit 221 may perform beamforming.

The communication unit 221 transmits and receives signals as described above. Accordingly, all or part of the communication unit 221 may be referred to as 'transmitter', 'receiver', or 'transceiver'. Further, in the following description, transmission and reception performed via a wireless channel are used in a sense including that the processing as described above is performed by the communication unit 221.

The storage unit 222 stores data such as a basic program, an application program, and configuration information for the operation of the terminal 120. The storage unit 222 may include a volatile memory, a non-volatile memory, or a combination of a volatile memory and a non-volatile memory. Further, the storage unit 222 provides stored data according to a request from the controller 223.

The controller 223 controls overall operations of the terminal 120. For example, the controller 223 transmits and receives signals via the communication unit 221. Further, the controller 223 records and reads data in/from the storage unit 222. Further, the controller 223 may perform functions of a protocol stack required by a communication standard. To this end, the controller 223 may include at least one processor or microprocessor, or may be a part of such a processor. Further, a part of the communication unit 221 and the controller 223 may be referred to as a communication processor (CP). According to various embodiments, the controller 223 may control to perform synchronization using a wireless communication network. For example, the controller 223 may control the terminal to perform operations according to various embodiments to be described later.

For example, the at least one processor of the controller 223 may include various processing circuitry and/or a plurality of processors. For example, the term "processor" used in this document, including the claims, may include various processing circuitry including at least one processor, and one or more of the at least one processor may be configured to individually and/or collectively perform various functions described below in a distributed manner. As used hereinafter, in case that "processor," "at least one processor," and "one or more processors" are described as being configured to perform various functions, these terms encompass, for example without limitation, situations in which one processor performs some of the functions cited and other processor(s) perform other portions of the functions cited, and also situations in which one processor may perform all of the functions cited. Additionally, the at least one processor may include a combination of processors that perform the various listed/disclosed functions, for example, in a distributed manner. The at least one processor may execute program instructions to achieve or perform various functions.

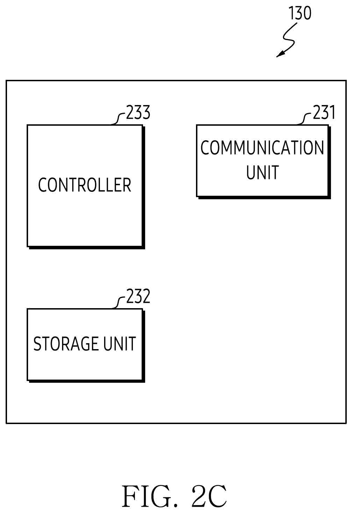

FIG. 2C illustrates an example of a functional configuration of a core network entity in a communication system.

A core network entity 130 illustrated in FIG. 2C may be understood as a configuration of an apparatus having at least one function among the AMF 130a, SMF 130b, UPF 130c, PCF 130d, NRF 130e, UDM 130f, NEF 130g, UDR 130h, or NWDAF 130i of FIG. 1. However, the embodiment of the disclosure is not limited thereto. For example, the core network entity 130 of FIG. 2C may be understood as an example of a functional configuration for an entity different from the above-described examples. The entity may be referred to as a node or a network function (NF). Terms such as e.g., "...unit," "...er/or," etc. used below may mean a unit that processes at least one function or operation, and it may be implemented as hardware, software, or a combination of hardware and software.

Referring to FIG. 2C, the core network entity 130 may include a communication unit 231, a storage unit 232, and a controller 233.

The communication unit 231 provides an interface for performing communication with other devices in the network. That is, the communication unit 231 converts a bit stream transmitted from the core network entity 130 to another device into a physical signal, and converts a physical signal received from another device into a bit stream. That is, the communication unit 231 may transmit and receive signals. Accordingly, the communication unit 231 may be referred to as a modem, a transmitter, a receiver, or a transceiver. At this time, the communication unit 231 allows the core network entity 130 to communicate with other devices or systems via a backhaul connection (e.g., a wired backhaul or a wireless backhaul) or via a network.

The storage unit 232 stores data such as a basic program, an application program, configuration information, and the like for the operation of the core network entity 130. The storage unit 232 may include a volatile memory, a non-volatile memory, or a combination of a volatile memory and a non-volatile memory. Further, the storage unit 232 provides stored data according to a request from the controller 233.

The controller 233 controls overall operations of the core network entity 130. For example, the controller 233 transmits and receives signals via the communication unit 231. Further, the controller 233 records and reads data in/from the storage unit 232. To this end, the controller 233 may include at least one processor. According to various embodiments, the controller 233 may control to perform synchronization using a wireless communication network. For example, the controller 233 may control the core network entity 130 to perform operations according to various embodiments to be described later.

For example, the at least one processor of the controller 233 may include various processing circuitry and/or a plurality of processors. For example, the term "processor" used in this document, including the claims, may include various processing circuitry including at least one processor, and one or more of the at least one processor may be configured to individually and/or collectively perform various functions described below in a distributed manner. As used hereinafter, in case that "processor," "at least one processor," and "one or more processors" are described as being configured to perform various functions, these terms may encompass, for example, without limitation, situations in which one processor performs some of the cited functions and other processor(s) perform other portions of the cited functions, and also situations in which one processor may perform all of the cited functions. Additionally, the at least one processor may include a combination of processors that perform the various listed/disclosed functions, for example, in a distributed manner. The at least one processor may execute program instructions to achieve or perform various functions.

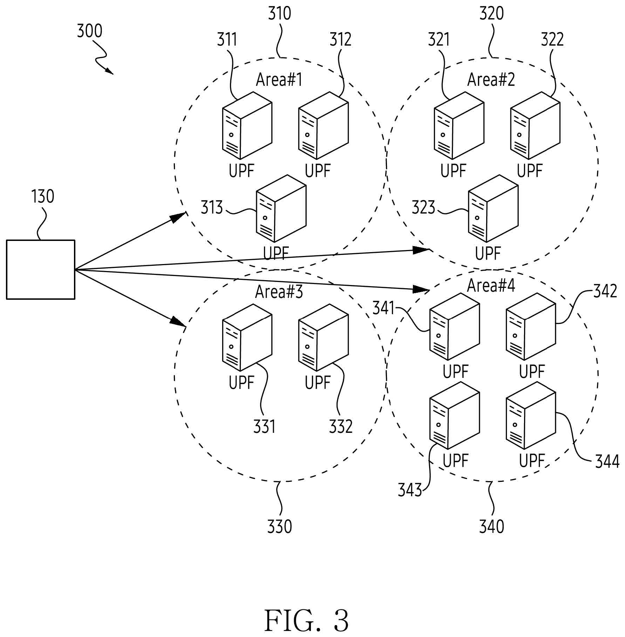

FIG. 3 illustrates an example of user plane functions (UPFs) deployed in a plurality of serving areas.

FIG. 3 illustrates an example 300 in which the core network entity 130 performs selection for UPFs deployed in a plurality of serving areas 310, 320, 330, and 340. In the example 300, the core network entity 130 may include an SMF (e.g., the SMF 130b or NRF 130e of FIG. 1) performing the selection for the UPFs. However, the example 300 is merely an example for convenience of description, and the embodiment of the disclosure is not limited thereto. For example, when a target of the selection is a plurality of SMFs, the core network entity 130 may include an AMF (e.g., the AMF 130a of FIG. 1).

Referring to the example 300, each of the plurality of serving areas 310, 320, 330, and 340 may be referred to as a specific area where a service is provided. For example, the specific area may be determined based on location information. For example, the specific area may be referred to as a tracking area (TA). For example, the location information may include a tracking area indicator (TAI), a tracking area code (TAC), or an identifier (ID) of an NF group in a serving area. Hereinafter, the serving area may be referred to as an NF area or an entity area.

Referring to the example 300, each of the plurality of serving areas 310, 320, 330, and 340 may include at least one entity. For example, the first serving area 310 may include three UPFs 311, 312, and 313. For example, the second serving area 320 may include three UPFs 321, 322, and 323. For example, the third serving area 330 may include two UPFs 331 and 332. For example, the fourth serving area 340 may include four UPFs 341, 342, 343, and 344. The at least one entity in each serving area may be referred to as one group. For example, the UPFs 311, 312, and 313 may be referred to as a first group, the UPFs 321, 322, and 323 as a second group, the UPFs 331, 332, and 333 as a third group, and the UPFs 341, 342, 343, and 344 as a fourth group. At this time, the group may be referred to as an entity group, an NF group, an entity set, or an NF set. For example, entities within the group may have the same location information. For example, the location information may include a TAI, a TAC, or an identifier (ID) of the group.

In the example 300, the core network entity 130 may select a UPF group (e.g., the first group, the second group, the third group, or the fourth group) based on service-related parameters including a data network name (DNN) and single network slice selection assistance information (S-NSSAI), location parameters including a tracking area (TA) and a TA list, and capacity parameters. At this time, the location parameters may be used to reduce a delay time by selecting a UPF close to the location of a terminal (user equipment) (e.g., the terminal 120 of FIG. 1) to be provided with a service. It is because, as edge computing is introduced and UPFs are miniaturized, they are deployed close to a base station, and the capacity of the UPF is limited. The core network entity 130 may implement the edge computing by selecting at least one UPF in a UPF group deployed in proximity using location information of the terminal.

In implementing the edge computing, its service quality may be improved when the miniaturized UPFs are utilized, but as the capacity (or available capacity) that can be processed in the UPF group decreases, it may be difficult to distribute an overload of a serving area where the UPF group is located. Further, since the number of UPFs included in the UPF group for the serving area increases, it may be difficult for a business operator to manage and operate the UPFs.

Hereinafter, in the present disclosure, a scheme is provided for detecting occurrence of an overload in a certain entity within an entity group or the entities of the entire entity group and distributing the load, thereby resolving the overload problem of the entity or the entity group. For example, an apparatus and a method according to embodiments of the disclosure may control the overload of the entities in the entity group using load information collected (or obtained, received) from the entities in the entity group. For example, an SMF (or NRF) may collect load information of each of UPFs in a UPF group and determine (or detect) the overload of each of the UPFs in the UPF group based on the load information. The apparatus and the method according to the embodiments of the disclosure may distribute a load (or call) to another entity (or an entity of another entity group) in the entity group, based on detecting the overload of a specific entity (or the entity group). Further, the apparatus and the method according to the embodiments of the disclosure may reduce a decrease in service quality by allocating the load to the specific entity again, based on detecting that the overload of the specific entity is resolved (or terminated). Further, the apparatus and the method according to the embodiments of the disclosure may prevent the overload by using an artificial intelligence model to detect the overload and distribute the load to another entity in advance before the overload of the specific entity is detected. Accordingly, the apparatus and the method according to the embodiment of the disclosure may allow the core network entity 130 to automatically detect the overload and perform distribution without intervention of a business operator (or administrator), thereby improving the quality of service and reducing the network operation costs.

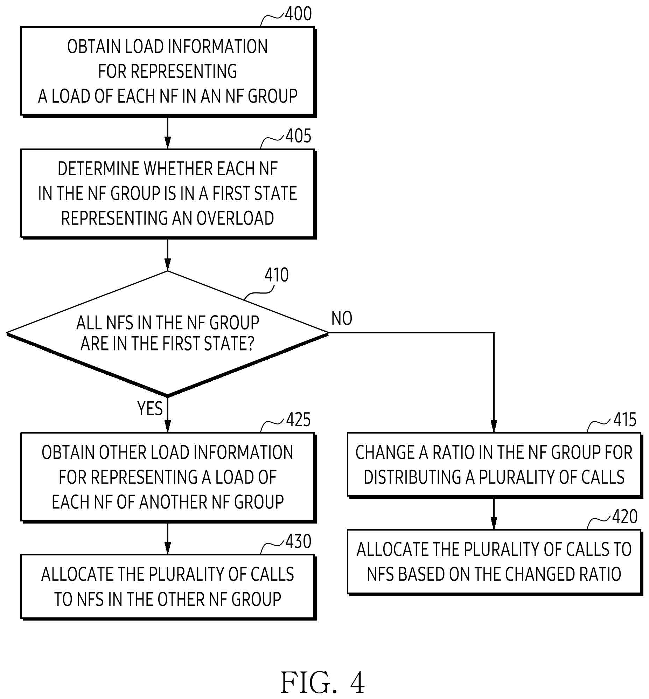

FIG. 4 illustrates an example of an operational flow for a method of controlling an overload of an NF.

At least a portion of the method of FIG. 4 may be performed by a first NF performing NF selection. For example, the first NF may include the core network entity 130 of FIG. 3. For example, the NF (or target NF) that is a target of the NF selection may be an example of an entity in the entity group of FIG. 3. For example, the NF may include a UPF (e.g., the UPF 311 of FIG. 3) in the UPF group of FIG. 3 (e.g., UPFs 311, 312, and 313 in the first serving area 310 of FIG. 3). At this time, the first NF may include an SMF or an NRF. For example, at least a portion of the method may be controlled by a processor of the first NF (e.g., the controller 233 of FIG. 2C). In the following embodiments, each operation may be performed sequentially, but it may not be necessarily performed sequentially. For example, the order of each operation may be changed, and at least two operations may be performed in parallel.

In operation 400, the first NF may obtain load information for representing a load of each NF in an NF group. For example, the first NF may collect (or receive) the load information from each NF of the NF group located in one serving area. The NF group may include a second NF and a third NF. For example, the second NF may represent the same type of NF as the third NF. For example, when the first NF is an SMF or an NRF, the NF group may include a plurality of UPFs. At this time, the second NF may be a first UPF, and the third NF may be a second UPF different from the first UPF.

According to an embodiment, the load information may include information for representing a load of each NF of the NF group. For example, the load information may include a plurality of parameters for identifying the load. For example, the first NF may collect load information of the second NF and load information of the third NF.

For example, the load information may include a factor related to a service provided by the second NF (or the third NF), a user plane element, and a control plane element. For example, the plurality of parameters may include at least one of the element related to the service, the user plane element, or the control plane element. Hereinafter, for convenience of description, the load information of the second NF is described as an example, but embodiments of the disclosure are not limited thereto. For example, the first NF may collect load information of each NF of the NF group including the second NF.

For example, the element related to the service may include at least one of the number of terminals (user equipment) related to the second NF, the number of protocol data unit (PDU) sessions, or the number of QoS (quality of service) flows. For example, the number of terminals related to the second NF may include a maximum number of terminals that the second NF may serve or the number of terminals to which the second NF is providing a service. For example, the number of PDU sessions and the number of QoS flows may represent the number of PDU sessions and QoS flows to which the second NF provides a service. Further, for example, the element related to the service may include at least one of information representing a load of a central processing unit (CPU), memory, or disk of the second NF.

For example, the user plane element may include at least one of traffic, a packet drop rate, or internet protocol (IP) pool usage. For example, the traffic or throughput may include information on the amount of traffic used during a unit time and the performance capacity of the maximum serviceable traffic. The packet drop rate may include the number and size of packets dropped due to a failure in data transmission/reception. The packet drop rate may be referred to as a drop packet. For example, the IP pool usage may include the number (or usage) of IPs allocated to a specific terminal in an IP pool.

For example, the control plane element may include information about TPS (transaction per second) or call. The TPS may include the number of messages per unit time (second). The information on call may include information on attempt, success, failure, and a cause for failure according to a call procedure.

According to an embodiment, a plurality of parameters included in the load information may be determined according to the second NF. For example, the plurality of parameters may be changed based on a function or a role of the second NF.

According to an embodiment, the first NF may periodically obtain the load information from the second NF. For example, the first NF may obtain the load information for every period of a specified length. For example, the specified length may be 5 minutes. However, embodiments of the disclosure are not limited thereto.

In operation 405, the first NF may determine whether each NF in the NF group is in a first state representing an overload. For example, the first NF may determine whether a load state of each NF in the NF group is the first state using the load information. For example, the first state may be referred to as an overload state, an overload mode, or a load limited state. Further, a second state different from the first state may be referred to as a default state, a non-overload state, or a default mode.

According to an embodiment, the first NF may determine whether the load state of the second NF is the first state based on a comparison between a specific parameter and at least one reference value set for the specific parameter. For example, the specific parameter may be included in the plurality of parameters of the load information received from the second NF. For the relationship between the specific parameter and the at least one reference value, the following table may be referenced.

**[Table 1]**

| | |
|---|---|
| **AUDIT_TIME** | **xxxxxxxxx (60 sec)** |
| **MINOR_REDUCE** | **xxxxxxxxx (30%)** |
| **MAJOR_REDUCE** | **xxxxxxxxx (50%)** |
| **CRITICAL_REDUCE** | **xxxxxxxxx (70%)** |
| | |
| **CP_CPU_LEVEL** | **LLIMIT** |
| **MINOR** | **xxxxxxxxx (60%)** |
| **MAJOR** | **xxxxxxxxx (75%)** |
| **CRITICAL** | **xxxxxxxxx (90%)** |
| | |
| **UP_CPU_LEVEL** | **LLIMIT** |
| **MINOR** | **xxxxxxxxx** |
| **MAJOR** | **xxxxxxxxx** |
| **CRITICAL** | **xxxxxxxxx** |
| | |
| **SESS_CNT** | **LLIMIT** |
| **MINOR** | **xxxxxxxxx** |
| **MAJOR** | **xxxxxxxxx** |
| **CRITICAL** | **xxxxxxxxx** |
| | |
| **THROUGHPUT** | **LLIMIT** |
| **MINOR** | **xxxxxxxxx** |
| **MAJOR** | **xxxxxxxxx** |
| **CRITICAL** | **xxxxxxxxx** |
| | |
| **NI_IPPOOL** | **LLIMIT** |
| **MINOR** | **xxxxxxxxx** |
| **MAJOR** | **xxxxxxxxx** |
| **CRITICAL** | **xxxxxxxxx** |

Referring to the above table, the parameter AUDIT_TIME may represent a period (e.g., 60 seconds) for collecting the load information, the parameter MINOR_REDUCE may represent a limitation ratio (e.g., 30%) of a call in case that the level of the parameter is a first level (e.g., minor), the parameter MAJOR_ REDUCE may represent a limitation ratio (e.g., 50%) of a call in case that the level of the parameter is a second level (e.g., major), and the parameter CRITICAL_REDUCE may represent a limitation ratio (e.g., 70%) of a call in case that the level of the parameter is a third level (e.g., CRITICAL). The limitation ratio may be referred to as a reduction ratio. The period and the limitation ratio of the call in the table are merely examples for convenience of description, and the embodiment of the disclosure is not limited thereto.

Referring to the above table, the parameter CP_CPU_LEVEL may represent a parameter representing a load of a CPU for a control plane among the plurality of parameters, the parameter MINOR of CP_CPU_LEVEL may represent a reference value (e.g., 60%) for determining that CP_CPU_LEVEL is the first level, the parameter MAJOR of CP_CPU_LEVEL may represent a reference value (e.g., 75%) for determining that CP_CPU_LEVEL is the second level, and the parameter CRITICAL of CP_CPU_LEVEL may represent a reference value (e.g., 75%) for determining that CP_CPU_LEVEL is the third level. For example, in case that the parameter CP_CPU_LEVEL is 65%, CP_CPU_LEVEL may be the first level. Alternatively, in case that the parameter CP_CPU_LEVEL is 80%, CP_CPU_LEVEL may be the second level. In case that the parameter CP_CPU_LEVEL is 95%, CP_CPU_LEVEL may be the third level. For example, the first level, the second level, and the third level may be used to recognize an overload state (i.e., the first state). For example, in case that the parameter CP_CPU_LEVEL is 50%, CP_CPU_LEVEL may be a non-overload state (i.e., the second state).

Referring to the table described above, the parameter UP_CPU_LEVEL may represent a parameter representing a load of a CPU for a user plane among the plurality of parameters, the parameter SESS_CNT may represent the number of PDU sessions among the plurality of parameters, the parameter THROUGHPUT may represent the traffic (or throughput) among the plurality of parameters, and the parameter NI_IPPOOL may represent the IP pool among the plurality of parameters. Although not shown in the table, at least one reference value (or reference level) may be set for each of the parameters UP_CPU_LEVEL, SESS_CNT, THROUGHPUT, and NI_IPPOOL.

In the above table, an example in which three reference values are set for each parameter is illustrated, but the embodiment of the disclosure is not limited thereto. For example, at least one reference value may be set for each parameter, and a different number of reference values may be set therefor. For example, one reference value may be set for UP_CPU_LEVEL, and two reference values may be set for SESS_CNT.

According to an embodiment, the first NF may recognize a level for each of the plurality of parameters of the load information received from the second NF. For example, the first NF may recognize that the load of the CPU for the control plane of the second NF is the first level, the traffic of the first NF is the second level, and the IP pool of the second NF is the second state (i.e., a non-overload state). According to an embodiment, the first NF may determine that the second NF is in the first state in case that at least one of the plurality of parameters is at the first level. In the above example, even though the IP pool is in the second state, the load of the CPU for the control plane is the first level and the traffic is the second level, and thus the first NF may determine that the second NF is in the second state. However, the embodiment of the disclosure is not limited thereto. For example, the first NF may determine that the second NF is in the first state in case that at least one of the plurality of parameters is equal to or higher than the second level or is at the third level. Hereinafter, for convenience of description, it is assumed an occasion that in case that at least one of the plurality of parameters is at the first level, the state of the second NF is the first state.

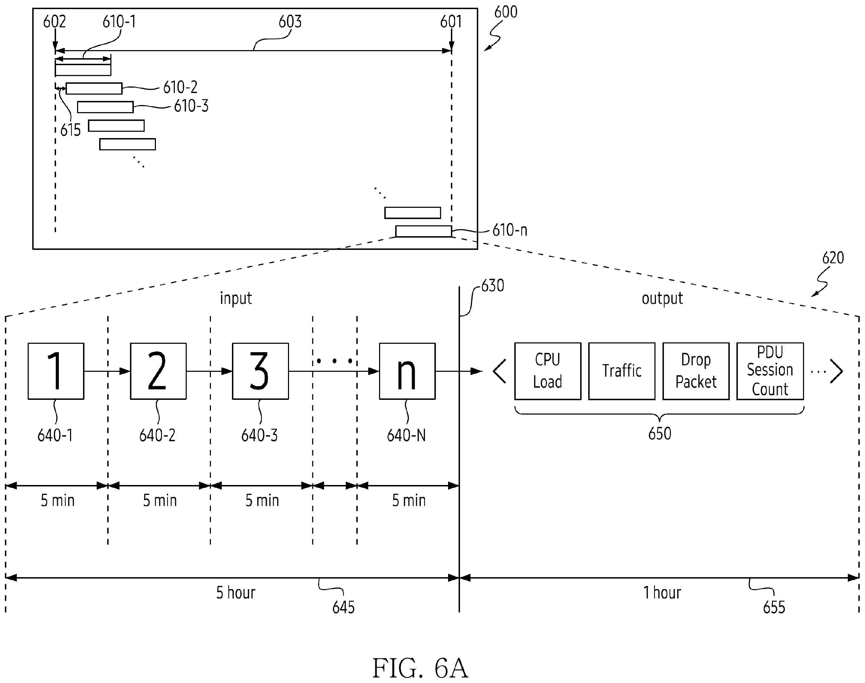

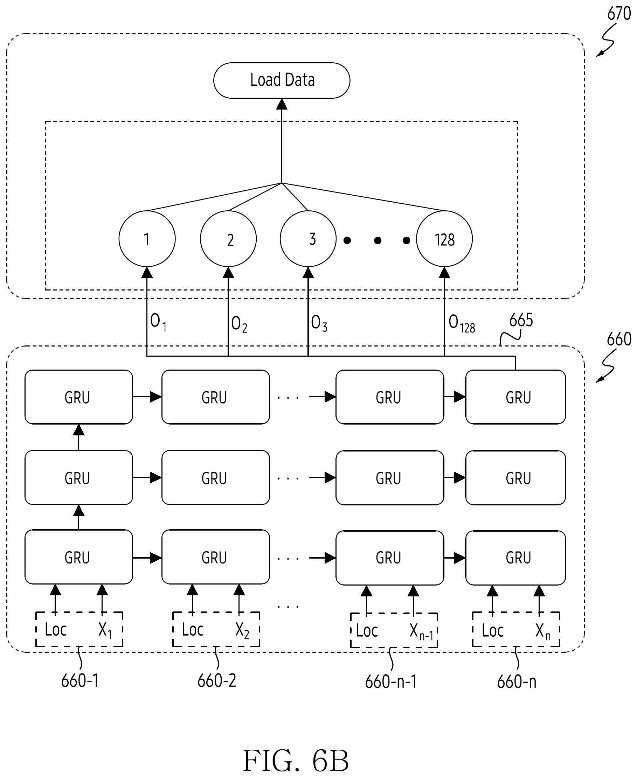

According to an embodiment, the first NF may determine whether each NF in the NF group is in the first state, based on load information predicted (or expected) using the load information (hereinafter, prediction load information). For example, the prediction load information may be generated by an artificial intelligence model using the latest (or most recently received) load information. For example, the artificial intelligence model may be trained through load information obtained for a plurality of time intervals before the timing when the latest load information is obtained. Specific details of the artificial intelligence model trained through the load information obtained for the plurality of time intervals will be described below in FIG. 6A. For example, specific details of the prediction load information generated by the artificial intelligence model will be described below in FIG. 6B. For example, the artificial intelligence model may be referred to as a load prediction model, a load prediction AI model, a statistical model, or a load data prediction model.

Referring to the above description, the first NF may determine the first state of the second NF based on a result predicted using the load information, in case that the prediction accuracy of the artificial intelligence model is relatively high (or in case that the prediction load information is relatively similar to actual load information). For example, in case that a difference between a first load value generated from a first set of load information before a reference time point among the plurality of time intervals and a second load value generated from a second set of load information after the reference time point among the plurality of time intervals exceeds a reference difference, the first NF may determine that the prediction accuracy is relatively high.

For example, the first load value may represent a value identified based on load information predicted for after the reference time point, based on the first set of load information which is load information before the reference time point. For example, the second load value may represent a value identified based on the second set of load information. For example, the first load value or the second load value may represent a summation of scaled values scored for each of the plurality of parameters values and values calculated based on a ratio between the plurality of parameters. Each of the scaled values may represent a number converted (scaled) to enable comparison between the plurality of parameters. For example, each of the scaled values may be a value between 0 and 100. For example, since it is difficult to compare the magnitude of CPU load and the number of PDU sessions due to their difference in scaling, each of the plurality of parameters may be converted into a scaled value.

In operation 410, the first NF may determine whether all NFs in the NF group are in the first state. For example, the first NF may determine whether the state of each of all NFs is the first state, based on the load information collected (or received) from each of all NFs in the NF group.

In operation 410, in case that at least one of all NFs of the NF group located in the serving area is not in the first state (i.e., in case that the at least one is in the second state), the first NF may perform operation 415. In contrast, in operation 410, in case that all NFs of the NF group are in the first state, the first NF may perform operation 425.

In operation 415, the first NF may change a ratio in the NF group for distributing a plurality of calls. For example, the first NF may change the ratio in the NF group for distributing the plurality of calls, in response to determining that at least one of all NFs of the NF group is in the second state. Hereinafter, for convenience of description, it is assumed that the second NF among the NFs of the NF group is in the first state and the third NF among the NFs of the NF group is in the second state. The third NF may be referred to as an NF capable of distributing calls or an available NF.

For example, the plurality of calls may represent newly incoming calls (or load) in relation to at least one terminal. For example, for the plurality of calls, the first NF may select an NF and allocate it to the selected NF. In other words, distributing the plurality of calls may represent selecting at least one NF for the plurality of calls and allocating the selected at least one NF. The serving area where the NF group is located may represent an area capable of providing a relatively optimal service to the at least one terminal when compared with another serving area. In other words, location information (e.g., TAI) of the at least one terminal and location information of the serving area may be identical to each other, or the location information of the serving area may indicate a location closest to the at least one terminal.

According to an embodiment, the first NF may change the ratio from a first ratio to a second ratio different from the first ratio. For example, the first ratio may represent a distribution ratio set before collecting load information from each NF in the NF group. For example, the first NF may distribute calls to the second NF and the third NF based on the first ratio. For example, the first ratio may be 1:1 for the second NF and the third NF. However, the embodiment of the disclosure is not limited thereto. The first NF may detect (or recognize) a degree of overload of the second NF which is in the first state. For example, the degree of overload may be determined using a level for each parameter of the second NF recognized by the first NF, as described in the table above. For example, the degree of overload may represent a maximum level among the levels for each parameter of the second NF. Alternatively, for example, it may represent an average level of the levels for each parameter of the second NF. Hereinafter, for convenience of description, it is assumed that the degree of overload of the second NF is a first level (or minor) and a limitation ratio of a call according to the first level is 50% (e.g., the MINOR_REDUCE is 50%). For example, the first NF may detect that the second NF in the first state is at the first level. As the first NF detects that the second NF is at the first level, the first NF may calculate the second ratio in which the ratio for the second NF is reduced by 50%. For example, the second ratio may be 0.5:1 for the second NF and the third NF.

In operation 420, the first NF may allocate the plurality of calls to NFs based on the changed ratio. For example, in case that the second ratio is used instead of the first ratio, the number of calls to be allocated (or distributed) to the second NF may be decreased. For example, according to the first ratio, first calls among the plurality of calls may be allocated to the second NF and second calls among the plurality of calls may be allocated to the third NF. In contrast, in case that the second ratio changed from the first ratio is used, third calls, which are fewer than the first calls, among the plurality of calls may be allocated to the second NF, and fourth calls, which are more than the second calls, among the plurality of calls may be allocated to the third NF. In the above example, an example of distributing the plurality of calls for the second NF and the third NF of the NF group is described, but the embodiment of the disclosure is not limited thereto. For example, the first NF may distribute the plurality of calls for the NF group including three or more NFs.

Referring to the above description, the first NF may resolve (or alleviate) the overload of the NF in the first state (e.g., the second NF) by changing the ratio of allocation for the NFs of the NF group in the serving area. In contrast, in case that all of the NFs of the NF group in the serving area are in the first state, the first NF may attempt distribution to an NF of the other serving area different from the serving area.

In operation 425, the first NF may obtain other load information for representing a load of each NF of another NF group. For example, the first NF may receive the other load information from each NF in the other NF group, in response to determining that all NFs of the NF group are in the first state. However, the embodiment of the disclosure is not limited thereto. For example, the first NF may determine a plurality of NF groups (e.g., the NF group and the other NF group) for providing a service to the at least one terminal, and may first determine whether there is an overload for the NF group capable of providing an optimal service among the plurality of NF groups. At this time, the first NF may collect load information of each of the plurality of NF groups.

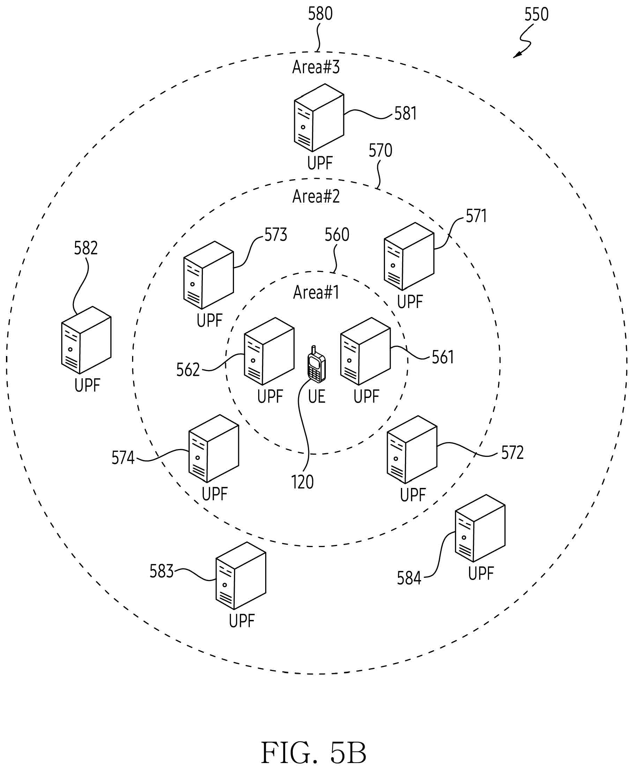

For example, the other NF group may include NFs in the other serving area. For example, the other serving area may have location information different from that of the serving area where the NF group is deployed. The location information may include a TAI, a TAC, or an ID of the NF group. Alternatively, for example, the other serving area may be larger in size than the serving area and may be set to include the serving area. However, the embodiment of the disclosure is not limited thereto. Specific details related thereto will be described with reference to FIG. 5B.

For example, for specific details regarding the other load information, the details regarding the load information may be applied substantially identically. For example, the other load information may include a plurality of parameters for identifying the load of each NF in the other NF group. For example, in case that the other NF group includes a fourth NF, the first NF may collect (or receive) other load information of the fourth NF from the fourth NF.

In operation 430, the first NF may allocate the plurality of calls to NFs in the other NF group. For example, the first NF may determine whether each NF in the other NF group is in the first state, based on the other load information. For example, the first NF may determine the state of the fourth NF in the other NF group to be the second state, using the other load information. For example, the first NF may allocate at least a portion of the plurality of calls to the fourth NF. In other words, the first NF may select an NF to provide the at least a portion of the plurality of calls as the fourth NF.

Referring to the above description, the first NF may allocate the at least a portion for the plurality of calls to the fourth NF of the other NF group rather than the NF group. As the other NF group is not the NF group having the same location information as the location information of the at least one terminal, the quality of service provided by the fourth NF may be relatively lowered. Accordingly, the first NF may perform redistribution of calls to the at least one NF, in case that the first state for at least one NF of the NF group is resolved. For example, it is assumed that the at least one NF is the second NF. According to an embodiment, after allocating the at least a portion to the fourth NF, the first NF may detect (or recognize) that the state of the second NF is changed from the first state to the second state. For example, the change from the first state to the second state may be determined based on the load information collected (or received, obtained) from the second NF. For example, the first NF may search the at least a portion at a timing when the change is detected. The first NF may determine an NF to provide the service for the at least a portion as the second NF of the NF group from the fourth NF of the other NF group. For example, the first NF may cause a PDU session reestablishment procedure to be performed, for allocating the at least a portion to the second NF, at the timing when the change is detected. Alternatively, for example, when the first NF detects that the at least one terminal transitions to an idle mode after the timing when the change is detected, the first NF may cause the PDU session reestablishment procedure to be performed. This is because the at least one terminal can perform a continuous service (e.g., a call) over time through the at least a portion. According to an embodiment, when a plurality of PDU session reestablishment procedures are performed, the overload of the second NF of the NF group may occur again, and thus the first NF may cause the PDU session reestablishment procedure to be performed for a specified number of calls during a specified time. For example, the specified time and the specified number may be determined based on the load information received from the second NF. For example, in case that the degree of load of the second NF is low (e.g., when the number of currently allocated calls is relatively small), the specified time may be decreased and the specified number may be increased. Alternatively, for example, in case that it is not an overload but the degree of load of the second NF is high (e.g., when the number of currently allocated calls is relatively large), the specified time may be increased and the specified number may be decreased.

Referring to the above description, an apparatus and a method according to embodiments of the disclosure may resolve or alleviate an overload issue of a specific NF or NFs of an entire NF group by detecting occurrence of the overload occurs in the specific NF (e.g., the second NF) in the NF group or the NFs of the entire NF group, and distributing the load. The apparatus and the method according to the embodiments of the disclosure may distribute a load (or call) to another NF (e.g., the third NF) in the NF group (or an NF (e.g., the fourth NF) of another NF group), based on detecting the overload of the specific NF (or the NF group). Further, the apparatus and the method according to the embodiments of the disclosure may reduce a decrease in service quality by reallocating the load to the specific NF (e.g., the second NF) again, based on detecting that the overload of the specific NF (e.g., the second NF) is resolved (or terminated). Furthermore, the apparatus and the method according to the embodiments of the disclosure may prevent occurrence of the overload by using an artificial intelligence model to detect the overload and distribute the load in advance before the overload of the specific NF is detected. Accordingly, according to the apparatus and the method according to the embodiments of the disclosure, the first NF may automatically detect the overload and perform distribution without intervention of a business operator (or administrator), thereby improving service quality and reducing network operation costs.

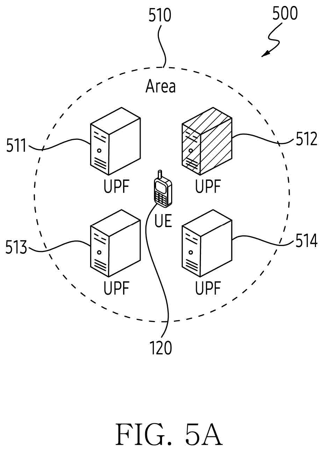

FIG. 5A illustrates an example of a method of controlling an overload of an NF in one serving area.

FIG. 5A illustrates an example 500 of a method of distributing calls in an NF group, based on determining in the operation 410 that at least one NF in the NF group is in the second state. For example, the NF group may include NFs deployed in one serving area 510. In the example 500, an example in which the NF group includes UPFs 511, 512, 513, and 514 is illustrated, but the embodiment of the disclosure is not limited thereto.

Referring to the example 500, the serving area 510 may include four UPFs 511, 512, 513, and 514. The serving area 510 may represent an area for providing a service to the terminal 120. In the example 500, the serving area 510 in which four UPFs 511, 512, 513, and 514 provide a service to one terminal 120 is illustrated, but the embodiment of the disclosure is not limited thereto. For example, the serving area 510 may include three or fewer or five or more UPFs. Alternatively, for example, the serving area 510 may provide a service to a plurality of terminals. For example, the UPFs 511, 512, 513, and 514 in the serving area 510 may have the same location information (e.g., TAI, TAC). At this time, location information of the terminal 120 may also be identical to location information of each of the UPFs 511, 512, 513, and 514 in the serving area 510. In other words, the location information of the UPFs 511, 512, 513, and 514 in the serving area 510 may indicate an area including the location of the terminal 120. Although not shown in the example 500, an entity (or NF) that distributes calls to the UPFs 511, 512, 513, and 514 may be an SMF (or NRF). Hereinafter, for convenience of description, an example in which the SMF distributes the calls is described. However, the embodiment of the disclosure is not limited thereto.

For example, the SMF may collect load information from each of the UPFs 511, 512, 513, and 514. For example, the SMF may detect the state of each of the UPFs 511, 512, 513, and 514 using the load information collected from each of the UPFs 511, 512, 513, and 514. In other words, the SMF may determine whether each of the UPFs 511, 512, 513, and 514 is in an overload state (or the first state) using the load information. However, the embodiment of the disclosure is not limited thereto. For example, the SMF may determine whether each of the UPFs 511, 512, 513, and 514 is in the overload state, using the load information and load information predicted by an artificial intelligence model (or prediction load information).

For example, the SMF may determine that the UPF 512 is in the first state and the UPFs 511, 513, and 514 are in the second state. In response to determining that the UPF 512 is in the first state, the SMF may change a call distribution ratio between the UPF 512 and the UPFs 511, 513, and 514. For example, the SMF may change a first ratio (e.g., UPF 511:UPF 512:UPF 513:UPF 514 = 1:1:1:1) to a second ratio. For example, the second ratio may be determined based on a degree of overload of the UPF 512. For example, in case that the degree of overload of the UPF 512 is the first level, the second ratio may be 1:0.5:1:1 based on the call limitation ratio (e.g., 50%) according to the first level. Alternatively, for example, in case that the degree of overload of the UPF 512 is the second level, the second ratio may be 1:0.3:1:1 based on the call limitation ratio (e.g., 70%) according to the second level.

In the example 500 of FIG. 5A, the SMF may distribute calls between the UPFs 511, 512, 513, and 514 in the serving area 510, thereby resolving (or alleviating) the overload issue of the UPF 512 in the first state. Hereinafter, in FIG. 5B is described an example of distribution for UPFs in a plurality of serving areas.

FIG. 5B illustrates an example of a method for controlling an overload of an NF in a plurality of serving areas.

FIG. 5B shows an example 550 of a method for distributing calls in another NF group based on determining in operation 410 that all NFs in an NF group are in the first state. For example, the NF group may include NFs deployed in a first serving area 560. For example, the other NF group may include NFs in a second serving area 570 or NFs in a third serving area 580.

Referring to the example 550, the first serving area 560 may include two UPFs 561 and 562. The first serving area 560 may represent an area where the quality of service provided to the terminal 120 is the highest. For example, the UPFs 561 and 562 in the first serving area 560 may have the same location information (e.g., TAI, TAC). At this time, the location information of the terminal 120 may also be identical to the location information of each of the UPFs 561 and 562 in the first serving area 560. For example, the location information of the UPFs 561 and 562 in the serving area 560 may indicate an area including the location of the terminal 120. Further, referring to the example 550, the second serving area 570 may include four UPFs 571, 572, 573, and 574. The second serving area 570 may represent an area having the next highest quality of service after the first serving area 560. For example, the UPFs 571, 572, 573, and 574 in the second serving area 570 may have the same location information (e.g., TAI, TAC). The location information of the UPFs 571, 572, 573, and 574 may be different from the location information of each of the terminal 120 and the UPFs 561 and 562 in the first serving area 560. For example, the location information of the UPFs 571, 572, 573, and 573 in the serving area 570 may indicate an area including the location of the terminal 120. Further, referring to the example 550, the third serving area 580 may include four UPFs 581, 582, 583, and 584. The third serving area 580 may represent an area with the lowest quality of service among the first serving area 560, the second serving area 570, and the third serving area 580, which are serving areas capable of providing the service to the terminal 120. For example, the UPFs 581, 582, 583, and 584 in the third serving area 580 may have the same location information (e.g., TAI, TAC). The location information of the UPFs 581, 582, 583, and 584 may be different from the location information of each of the terminal 120, the UPFs 561 and 562 in the first serving area 560, and the UPFs 571, 572, 573, and 574 in the second serving area 570. For example, the location information of the UPFs 581, 582, 583, and 583 in the serving area 580 may indicate an area including the location of the terminal 120. In the example 550, the example is illustrated including one terminal 120, the UPFs 561 and 562 in the first serving area 560, the UPFs 571, 572, 573, and 574 in the second serving area 570, and the UPFs 581, 582, 583, and 584 in the third serving area 580, but the embodiment of the disclosure is not limited thereto.

Although not shown in the example 550, the entity (or NF) that distributes calls in a plurality of serving areas 560, 570, and 580 may be an SMF (or NRF). Hereinafter, for convenience of description, an example in which the SMF distributes the calls is described. However, the embodiment of the disclosure is not limited thereto.

For example, the SMF may collect load information from each of the UPFs 561 and 562. For example, the SMF may detect the state of each of the UPFs 561 and 562 using the load information collected from each of the UPFs 561 and 562. In other words, the SMF may determine whether each of the UPFs 561 and 562 is in an overload state (or the first state) using the load information. However, the embodiment of the disclosure is not limited thereto. For example, the SMF may also determine whether each of the UPFs 561 and 562 is in the overload state, using the load information and load information predicted (or prediction load information) by an artificial intelligence model.

For example, the SMF may determine that the UPF 561 and the UPF 562 are in the first state. In response to determining that the UPF 561 and the UPF 562 are in the first state, the SMF may collect load information from the UPFs 571, 572, 573, and 574 of the second serving area 570. However, the embodiments of the disclosure are not limited thereto. For example, the SMF may collect the load information of the UPFs 571, 572, 573, and 574 of the second serving area 570, while collecting the load information of the UPFs 561 and 562 of the first serving area 560.

For example, the SMF may determine the state of the UPFs 571, 572, 573, and 574 using the load information of the UPFs 571, 572, 573, and 574. For example, the SMF may determine that the UPF 571 among the UPFs 571, 572, 573, and 574 is in the second state. The SMF may allocate newly incoming calls (or new calls) to the UPF 571.

Alternatively, for example, the SMF may collect the load information from the UPFs 581, 582, 583, and 584 of the third serving area 580, in response to determining that all of the UPFs 571, 572, 573, and 574 are in the first state. However, the embodiments of the disclosure are not limited thereto. For example, the SMF may collect the load information of the UPFs 581, 582, 583, and 584 of the third serving area 580 as well as the load information of the UPFs 571, 572, 573, and 574 of the second serving area 570, while collecting the load information of the UPFs 561 and 562 of the first serving area 560. The SMF may determine that the UPF 582 and the UPF 583 among the UPFs 581, 582, 583, and 584 are in the second state. The SMF may allocate newly incoming calls (or new calls) to the UPF 582 and the UPF 583.

After allocating the calls to the UPF 571 or the UPF 582 and the UPF 583, the SMF may collect the load information from each of the UPFs 561 and 562 of the first serving area 560. For example, the SMF may detect the state of each of the UPFs 561 and 562 using the load information collected from each of the UPFs 561 and 562. For example, after allocating the calls, the SMF may detect that the UPF 561 is changed from the first state to the second state. Accordingly, the SMF may perform redistribution for the calls allocated to the UPF 571 or the UPF 582 and the UPF 583. For example, the SMF may allocate the calls to UPF 561. For example, at the timing when the change is detected, the SMF may cause a PDU session reestablishment procedure to be performed in order to allocate the calls to UPF 561. Alternatively, for example, when the SMF detects that the terminal 120 transitions to an idle mode after the timing when the change is detected, the SMF may cause the PDU session reestablishment procedure to be performed. According to an embodiment, the SMF may cause the PDU session reestablishment procedure to be performed for a specified number of calls during a specified time. For example, the specified time and the specified number may be determined based on the load information received from the UPF 561.

FIG. 6A illustrates an example of a method for training an artificial intelligence model (AI model) based on load information of a plurality of time intervals.

The load information may represent load information that the first NF (e.g., SMF or NRF) of FIG. 4 collects from each NF (e.g., UPF) in the NF group. The artificial intelligence model, which is the training target of FIG. 6A, may represent an example of an artificial intelligence model 660 of FIG. 6B to be described later.

FIG. 6A shows an example 600 in which the first NF collects load information during a designated duration 603. Referring to the example 600, the first NF may collect the load information for the designated duration 603 from the current time point 601 back to the past time point 602. For example, the designated duration 603 may be 3 months. For example, the time interval may be 5 minutes. The time interval may represent a period for collecting the load information. Referring to the example 600, the current time point 601 changes over time and the designated duration 603 has a specific time length, and thus the past time point 602 may change. The designated duration 603 may also represent a length of data that the first NF stores in relation to the NFs in the NF group.

For example, the designated duration 603 may be composed of a set of sequences including a plurality of time intervals. For example, the set of sequences may include sequences 610-1, 610-2, 610-3, ..., and 610-n. For example, a temporal length of one sequence may be 6 hours. In other words, one sequence may include 72 time intervals.

For example, a temporal difference between two adjacent sequences among the sequences 610-1, 610-2, 610-3, ..., and 610-n may be defined as one time interval. For example, a difference 615 between sequence 610-1 and sequence 610-2 may correspond to a length of one time interval (e.g., 5 minutes).

The artificial intelligence model may perform training for each sequence. For example, the artificial intelligence model may be trained based on one sequence 610-n. Referring to FIG. 6A, a specific example 620 for a sequence 610-n is shown.

Referring to the example 620, the sequence 610-n may include a plurality of time intervals 640-1, 640-2, 640-3, ..., 640-n, and 650. For example, based on a first set of load information before a reference time point 630 among the plurality of time intervals 640-1, 640-2, 640-3, ..., 640-n, and 650, the artificial intelligence model may predict load information after the reference time point 630. In other words, the artificial intelligence model may identify prediction load information. For example, the reference time point 630 may represent a point 5 hours past the earliest time point within the sequence 610-n. For example, the first set of load information may represent load information corresponding to a first time domain 645. For example, a temporal length of the first time domain 645 may be 5 hours. For example, the first set of load information may include load information corresponding to a plurality of time intervals 640-1, 640-2, 640-3, ..., 640-n.

The artificial intelligence model may compare the prediction load information with a second set of load information after the reference time point 630. For example, the second set of load information may represent load information corresponding to a second time domain 655. For example, a temporal length of the second time domain 655 may be 1 hour. For example, the second set of load information may include load information corresponding to a plurality of time intervals including load information 650. For example, a plurality of parameters included in the second set of load information may include CPU load, traffic, drop packets, and the number of PDU sessions. However, the embodiments of the disclosure are not limited thereto. The artificial intelligence model may be trained by comparing the prediction load information and the second set of load information.

Referring to FIG. 6A, a first portion of the sequences 610-1, 610-2, 610-3, ..., 610-n within the designated duration 603 may be used for training the artificial intelligence model. Further, a second portion, different from the first portion, of the sequences 610-1, 610-2, 610-3, ..., 610-n within the designated duration 603 may be used to evaluate the prediction accuracy (or the accuracy) of the trained artificial intelligence model. In other words, training the artificial intelligence model through the example 620 of FIG. 6A may be performed based on each of the sequences of the first portion. The first portion and the second portion may not overlap each other. For example, the portion of sequences 610-1, 610-2, 610-3, ..., 610-n included in the first portion may be different from the portion of sequences 610-1, 610-2, 610-3, ..., 610-n included in the second portion. For example, the first portion may include 70% of the sequences 610-1, 610-2, 610-3, ..., 610-n. The second portion may include 30% of the sequences 610-1, 610-2, 610-3, ..., 610-n. However, the embodiment of the disclosure is not limited thereto, and the ratio between the first portion and the second portion may be changed. Further, each of the first portion and the second portion may include any sequences of the sequences 610-1, 610-2, 610-3, ..., 610-n. In other words, the sequences included in the first portion or the second portion may be identified randomly rather than in time-series (or chronologically).

FIG. 6A describes an example in which the artificial intelligence model compares load information (or a second set of load information) including a plurality of parameters with prediction load information, but the embodiment of the disclosure is not limited thereto. For example, the artificial intelligence model may be trained by comparing a scaled load value based on the plurality of parameters of the load information with a scaled load value of the prediction load information.

For example, based on a first set of load information before a reference time point 630 among a plurality of time intervals 640-1, 640-2, 640-3, ..., 640-n, and 650, the artificial intelligence model may identify a first load value related to a timing after the reference time point 630. For example, the reference time point 630 may represent a time point 5 hours past the earliest time point within sequence 610-n. For example, the first set of load information may represent load information corresponding to a first time domain 645. For example, the temporal length of the first time domain 645 may be 5 hours. For example, the first set of load information may include load information corresponding to the plurality of time intervals 640-1, 640-2, 640-3, ..., 640-n. The first load value may represent a value related to a time point after the predicted reference time point 630 based on the first set of load information. The first load value may represent a scaled value based on a plurality of parameters of the first set of load information and a ratio between the plurality of parameters. The artificial intelligence model may compare the first load value with a second load value identified based on a second set of load information after the reference time point 630. For example, the second set of load information may represent load information corresponding to a second time domain 655. For example, the temporal length of the second time domain 655 may be 1 hour. For example, the second set of load information may include load information corresponding to a plurality of time intervals including load information 650. The second load value may represent a value scaled based on a plurality of parameters of the load information corresponding to the plurality of time intervals including the load information 650 and a ratio between the plurality of parameters. As described above, the first NF may train the artificial intelligence model by comparing the first load value and the second load value.

Although FIG. 6A illustrates the first NF including one artificial intelligence model as an example, the embodiment of the disclosure is not limited thereto. For example, the first NF may include a plurality of artificial intelligence models. For example, the first NF may train each of the plurality of artificial intelligence models based on load information obtained during a designated duration 603.

Further, the temporal lengths exemplified in FIG. 6A are merely an example for convenience of description, and the embodiment of the disclosure is not limited thereto. For example, the temporal length of the designated duration 603 may have another length. For example, a temporal length of one sequence may have a different length. For example, the temporal lengths of the first time domain and the second time domain within one sequence may have different lengths. For example, the temporal length of one time interval may have a different length. Further, the first portion and the second portion in the designated duration 603 may be identified at different ratios.

FIG. 6B illustrates an example of a method for obtaining prediction load information using an artificial intelligence model.

In FIG. 6B, an example 670 of a method for training an artificial intelligence model 660 for each parameter of load information and obtaining the prediction load information through the trained artificial intelligence model 660 is shown.

Referring to the example 670, the artificial intelligence model 660 may be implemented with a recurrent neural network (RNN) (or stacked RNN) trained using sequential inputs and a fully connected neural network (FCNN) for generating an output. The RNN may use a plurality of gated recurrent units (GRUs). However, the embodiment of the disclosure is not limited thereto. For example, the RNN may be also implemented with an RNN-based artificial intelligence model (e.g., long short term memory (LSTM) or gated recurrent units (GRUs)). Alternatively, for example, the artificial intelligence model 660 may be implemented with a prediction model for time-series data (e.g., transformer).

Referring to the example 670, the artificial intelligence model 660 may be trained for each parameter of the load information. For example, the load information may include a plurality of parameters (e.g., traffic, number of PDU sessions, CPU load), and the artificial intelligence model 660 may be trained for each parameter. For example, the artificial intelligence model 660 may be trained through inputs 660-1, 660-2, ..., 660-n-1, 660-n for a plurality of time intervals. For example, each of the inputs 660-1, 660-2, ..., 660-n-1, 660-n may include parameters (or load information) and location information (loc). For example, the location information may represent location information of an NF of an NF group providing the load information. For example, the location information may include a TA or an ID of the NF group. For example, the artificial intelligence model 660 may be trained using an input 660-1 including a first time interval and location information in the first time interval, an input 660-2 including a second time interval following the first time interval and location information in the second time interval, an input 660-n-1 including an (n-1)-th time interval and location information in the (n-1)-th time interval, and an input 660-n including an n-th time interval and location information in the n-th time interval.

Referring to the example 670, the artificial intelligence model 660 may generate output values 665 using the inputs 660-1, 660-2, ..., 660-n-1, 660-n. For example, the output values 665 may include 128 output values O₁, O², O₃, ..., and O₁₂₈. However, the embodiment of the disclosure is not limited thereto. For example, the output values 665 may be used to generate the prediction load information. For example, the prediction load information generated from the output values 665 may be generated for a specific parameter. For example, the first NF may evaluate the accuracy (or prediction accuracy) of the artificial intelligence model 660 by comparing the prediction load information generated using the artificial intelligence model 660 and the actually collected load information. For example, the first NF may perform prediction for an NF of the NF group using the artificial intelligence model 660, in case that the accuracy is equal to or greater than a threshold level. For example, the first NF may determine whether the NF is in the first state based on the artificial intelligence model 660, using location information of a terminal (e.g., the terminal 120 of FIG. 5A and FIG. 5B) and load information recently obtained from the NF of the NF group.

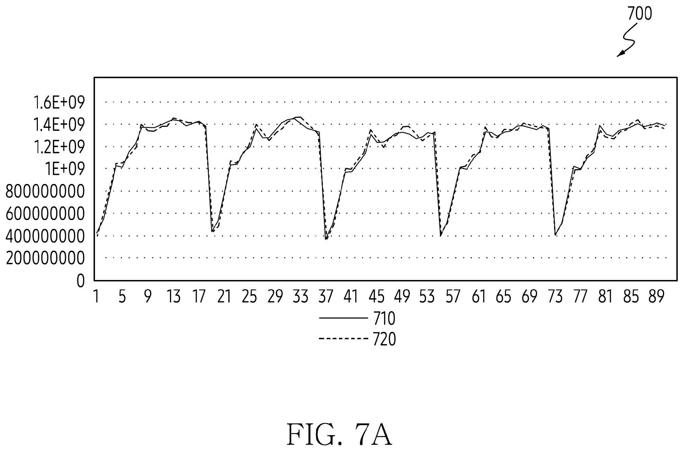

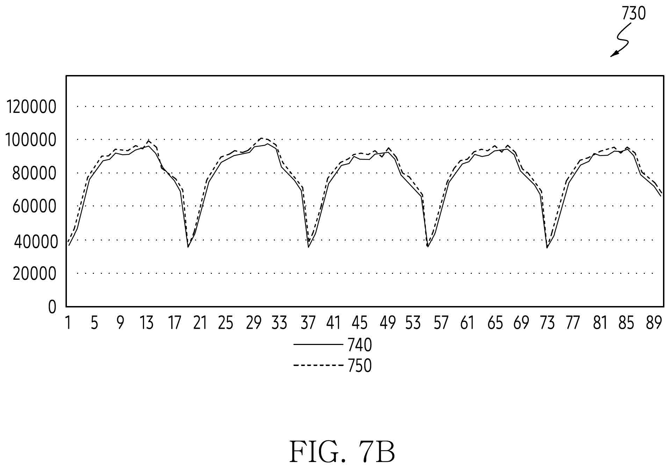

FIGS. 7A and 7B illustrate examples of graphs representing prediction load information and collected load information over time.

Each of the prediction load information and the collected load information may include a plurality of parameters. For example, the plurality of parameters may include traffic and the number of PDU sessions. For example, the prediction load information may be generated using the artificial intelligence model 660 of FIG. 6B.

FIG. 7A illustrates an example of a graph 700 representing the amount of traffic collected over time and the amount of traffic predicted using an artificial intelligence model. The horizontal axis of the graph 700 may represent time (unit: hour), and the vertical axis may represent the amount of traffic. The graph 700 may include a first line 710 representing the amount of traffic collected over time and a second line 720 representing the predicted amount of traffic. Comparing the first line 710 and the second line 720, an error rate between the collected traffic amount of the first line 710 and the predicted traffic amount of the second line 720 may be approximately 1.45%. For example, the error rate may be calculated based on a mean absolute percentage error (MAPE).

FIG. 7B illustrates an example of a graph 730 representing the number of PDU sessions collected over time and the number of PDU sessions predicted using an artificial intelligence model. The horizontal axis of the graph 730 may represent time (unit: hour), and the vertical axis may represent the number of PDU sessions. The graph 730 may include a third line 740 representing the number of PDU sessions collected over time and a fourth line 750 representing the predicted number of PDU sessions. Comparing the third line 740 and the fourth line 750, an error rate between the collected number of PDU sessions of the third line 740 and the predicted number of PDU sessions of the fourth line 750 may be approximately 1.68%. For example, the error rate may be calculated based on the MAPE.

Referring to FIGS. 7A and 7B, the device and method according to an embodiment of the disclosure may form a low error rate between load information collected during a designated time duration (e.g., 3 months) and load information predicted from the load information using the artificial intelligence model 660. Accordingly, the first NF (e.g., the first NF of FIG. 4) including the artificial intelligence model 660 may relatively accurately predict future load information, based on the load information collected currently or in the past.

Referring to the above description, the first NF according to embodiments of the disclosure may automatically detect an overload of each NF by collecting load information (or load information of a user plane) of each NF in an NF group in real time. Further, in case of detecting such an overload, the first NF may resolve or alleviate the overload of the overloaded (or first state) NF by distributing the load (or call) for the NF in which the overload is detected. The first NF according to the embodiments of the disclosure may quickly detect and resolve the overload, thereby preventing a failure in service and improving its service quality. Furthermore, the first NF according to the embodiments of the disclosure may automatically detect and distribute the overload, and thus human errors by an operator can be prevented and the operating cost of the network including the first NF can be reduced.

Further, the first NF according to the embodiments of the disclosure may detect an overload of an entirety of a specific NF group, and therefore it may preferentially distribute calls to an NF of an NF group that is different from but closest to the specific NF group. Accordingly, it is possible to reduce degradation in the quality of the service provided based on the call. Furthermore, in case that the overload state of at least one NF of the specific NF group is resolved, the first NF may improve the quality of service by performing a recovery operation of redistributing the call to the at least one NF again.

In addition, the first NF according to the embodiments of the disclosure may predict an overload in advance before the overload of a specific NF occurs, by using an artificial intelligence model (e.g., the artificial intelligence model 660 of FIG. 6B). For example, in case that a relatively high level of overload situation occurs for the specific NF, the overload caused by the existing traffic may worsen even if the distribution of new calls is restricted. Therefore, the first NF may limit and distribute new calls incoming at a faster time point by predicting the overload using the artificial intelligence model. Accordingly, the first NF may prevent a service failure due to the overload.

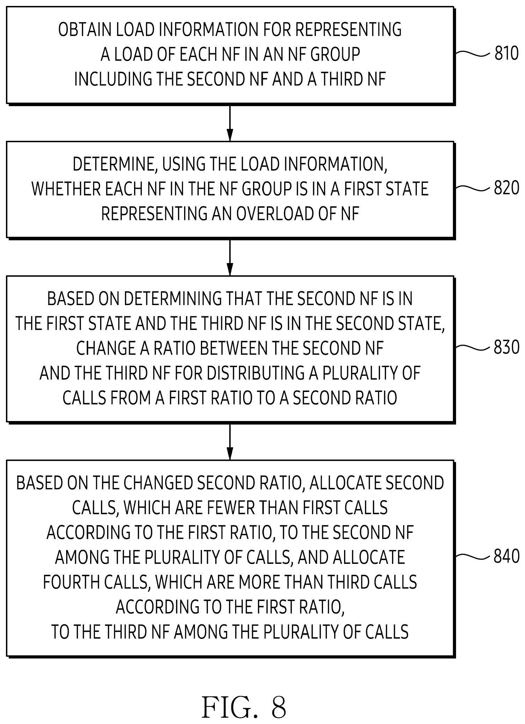

FIG. 8 illustrates an example of an operational flow of a method in which a first network function (NF) controls an overload of a second NF of an NF group.

At least a portion of the method of FIG. 8 may be performed by a first NF that performs NF selection. For example, the first NF may represent an example of the first NF of FIG. 4. For example, the first NF of FIG. 8 may include the core network entity 130 of FIG. 3. For example, the second NF, which is the target of the NF selection, may be an example of an entity (e.g., UPF 311) of an entity group of FIG. 3 (e.g., UPFs 311, 312, and 313 within the first serving area 310), a UPF 512 of a UPF group (e.g., UPFs 511, 512, 513, and 514) within the serving area 510 of FIG. 5A, or a UPF 561 or 562 of a UPF group (e.g., UPFs 561 and 562) within the first serving area 560 of FIG. 5B. In this case, the first NF may include an SMF or an NRF.

For example, at least a portion of the method of FIG. 8 may be controlled by a processor (e.g., the controller 233 of FIG. 2C) of the first NF. In the following embodiments, each operation may be performed sequentially, but may not be necessarily performed sequentially. For example, the order of each operation may be changed, and at least two operations may be performed in parallel.

In operation 810, the first NF may obtain load information for representing a load of each NF in an NF group including the second NF and a third NF. For example, the first NF may collect the load information of each NF in the NF group. For example, the NF group may be deployed within one serving area. For example, in case that the NF group includes UPFs and the second NF is a first UPF among the UPFs, the third NF may be a second UPF. The second NF and the third NF in the NF group may have the same location information.

According to an embodiment, the load information may include information for representing a load of each NF of the NF group. For example, the load information may include a plurality of parameters for identifying the load. For example, the first NF may collect load information of the second NF and load information of the third NF.

For example, the load information may include a factor (factor) related to a service provided by the second NF (or the third NF), a user plane factor, and a control plane factor. For example, the plurality of parameters may include at least one of the factor related to the service, the user plane factor, or the control plane factor. Hereinafter, for convenience of description, the load information of the second NF is described as an example, but the embodiment of the disclosure is not limited thereto. For example, the first NF may collect load information of each NF of the NF group including the second NF.

For example, the factor related to the service may include at least one of the number of terminals (user equipment) related to the second NF, the number of PDU (protocol data unit) sessions, or the number of QoS (quality of service) flows. For example, the number of terminals related to the second NF may include the maximum number of terminals that the second NF can serve or the number of terminals to which the second NF is providing a service. For example, the number of PDU sessions and the number of QoS flows may represent the number of PDU sessions and QoS flows to which the second NF provides services. Further, for example, the factor related to the service may include at least one of information representing a load of a central processing unit (CPU), a memory, or a disk of the second NF.

For example, the user plane factor may include at least one of traffic, packet drop rate, or IP (internet protocol) pool usage. For example, the traffic (or throughput) may include information on the amount of traffic used during a unit time and the performance capacity of the maximum serviceable traffic. The packet drop rate may include the number and size of packets dropped due to failure in data transmission/reception. The packet drop rate may be referred to as a drop packet. For example, the IP pool usage may include the number of IPs (or usage) allocated to a specific terminal within an IP pool.

For example, the control plane factor may include information on TPS (transactions per second) or a call. The TPS may include the number of messages per unit time (second). The information on the call may include information on attempt, success, failure, and cause of failure according to a call procedure.

According to an embodiment, a plurality of parameters included in the load information may be determined based on the second NF. For example, the plurality of parameters may be changed based on a function or a role of the second NF.

According to an embodiment, the first NF may obtain the load information periodically from the second NF. For example, the first NF may obtain the load information for each period of a specified length. For example, the specified length may be 5 minutes. However, the embodiment of the disclosure is not limited thereto.

In operation 820, the first NF may determine, using the load information, whether it is in a first state representing an overload of each NF in the NF group. For example, the first NF may determine whether the load state of each NF in the NF group is the first state using the load information. For example, the first state may be referred to as an overload state, an overload mode, or a load limiting state. Further, the second state different from the first state may be referred to as a default state, a non-overload state, or a default mode.

According to an embodiment, the first NF may determine whether it is in the first state based on a comparison between a specific parameter and at least one reference value set for the specific parameter. For example, the specific parameter may be included in the plurality of parameters of the load information received from the second NF. Table 1 above may be referred to for the relationship between the specific parameter and the at least one reference value.

According to an embodiment, the first NF may recognize a level for each of the plurality of parameters of the load information received from the second NF. For example, the first NF may recognize that the load of the CPU for the control plane of the second NF is at a first level, the traffic of the first NF is at a second level, and the IP pool of the second NF is in the second state (i.e., a non-overload state). According to an embodiment, the first NF may determine that the second NF is in the first state, in case that at least one of the plurality of parameters is at the first level. In the above example, even if the IP pool is in the second state, the load of the CPU for the control plane is at the first level and the traffic is at the second level, and thus the first NF may determine the second NF to be in the second state. However, the embodiment of the disclosure is not limited thereto. For example, the first NF may determine that the second NF is in the first state in case that at least one of the plurality of parameters is equal to or higher than the second level or is at the third level.

According to an embodiment, the first NF may also determine whether each NF in the NF group is in the first state, based on load information predicted or expected using the load information (hereinafter, referred to as prediction load information). For example, the prediction load information may be generated by an artificial intelligence model (e.g., the artificial intelligence model 660 of FIG. 6B) using the latest load information. For example, the artificial intelligence model may be trained through load information obtained for a plurality of time intervals prior to a timing point when the latest load information is obtained and location information of the NF providing the load information. FIGS. 6A and 6B may be referred to for specific details of the trained artificial intelligence model.

According to an embodiment, in case that the prediction accuracy of the artificial intelligence model is equal to or greater than a threshold level, the first NF may determine the first state of the second NF based on a result predicted using the load information. For example, in case that a difference between a first load value generated from a first set of load information prior to a reference time point among the plurality of time intervals and a second load value generated from a second set of load information after the reference time point among the plurality of time intervals exceeds a reference difference, the first NF may determine that the prediction accuracy is relatively high. For example, the first load value may represent a value identified based on load information predicted for a timing after the reference time point based on the first set of load information, which is load information prior to the reference time point. For example, the second load value may represent a value identified based on the second set of load information.

In operation 830, based on determining that the second NF is in the first state and the third NF is in the second state, the first NF may change a ratio between the second NF and the third NF for distributing a plurality of calls from a first ratio to a second ratio. For example, the first NF may determine that the second NF of the NF group is in the first state and the third NF of the NF group is in the second state. In other words, in case that at least one NF of the NF group is not overloaded, the first NF may change the ratio in the NF group for distributing the plurality of calls. For example, the third NF may be referred to as an NF capable of distributing calls or an available NF.

According to an embodiment, the first NF may change the ratio from a first ratio to a second ratio, which is different from the first ratio. For example, the first ratio may represent a distribution ratio set before collecting load information from each NF in the NF group. For example, the first NF may distribute calls to the second NF and the third NF based on the first ratio. For example, the first ratio may be a ratio of 1:1 for the second NF and the third NF. However, the embodiment of the disclosure is not limited thereto.

According to an embodiment, the first NF may detect (or recognize) the degree of overload of the second NF in the first state. For example, the degree of overload may be determined using a level for each parameter of the second NF recognized by the first NF, as described in Table 1 above. For example, the degree of overload may represent a maximum level of the levels for each parameter of the second NF. Alternatively, for example, it may represent an average level of the levels for each parameter of the second NF.

In operation 840, based on the changed second ratio, the first NF may allocate second calls, which are fewer than first calls according to the first ratio, to the second NF among the plurality of calls, and allocate fourth calls, which are more than third calls according to the first ratio, to the third NF among the plurality of calls.

For example, the first calls among the plurality of calls may be allocated to the second NF and the second calls among the plurality of calls may be allocated to the third NF, according to the first ratio. In contrast, in case that the second ratio changed from the first ratio is used, third calls, which are fewer than the first calls among the plurality of calls, may be allocated to the second NF, and fourth calls, which are more than the second calls among the plurality of calls, may be allocated to the third NF. In the above example, an example of distributing the plurality of calls to the second NF and the third NF of the NF group is described, but the embodiment of the disclosure is not limited thereto. For example, the first NF may distribute the plurality of calls to the NF group including three or more NFs. For example, in case that the second ratio is used instead of the first ratio, the number of calls to be allocated (or distributed) to the second NF may be reduced.

As described above, a device of a first network function (NF) may include memory including instructions. The device may include a transceiver. The device may include at least one processor. The instructions may be configured to, when executed individually or collectively by the at least one processor, cause the device to obtain load information for representing a load of each NF of an NF group including a second NF and a third NF. The instructions may be configured to, when executed individually or collectively by the at least one processor, cause the device to determine whether each NF of the NF group is in a first state representing an overload of the NF, using the load information. The instructions may be configured to, when executed individually or collectively by the at least one processor, cause the device to, based on determining that the second NF is in the first state and the third NF is in a second state different from the first state, change a ratio between the second NF and the third NF for distributing a plurality of calls from a first ratio to a second ratio different from the first ratio. The instructions may be configured to, when executed individually or collectively by the at least one processor, cause the device to, based on the changed second ratio, allocate second calls to the second NF, the second calls being less than first calls according to the first ratio from among the plurality of calls, and allocate fourth calls to the third NF, the fourth calls being more than third calls according to the first ratio from among the plurality of calls.

According to an embodiment, the load information of the second NF may include at least one of a factor associated with a service provided by the second NF, a user plane factor, or a control plane factor. The factor associated with the service may include the number of user equipment associated with the second NF, the number of protocol data unit (PDU) sessions, or the number of quality of service (QoS) flows, and information representing a load of a central processing unit (CPU), a memory, or a disk of the second NF.

According to an embodiment, the user plane factor may include traffic, a packet drop rate, or internet protocol (IP) pool usage. The control plane factor may include transaction per second (TPS) or information on a call.

According to an embodiment, NFs in the NF group may have location information. The location information may include a tracking area indicator (TAI).

According to an embodiment, the instruction, when executed by the at least one processor individually or collectively, may cause the device to determine whether a first parameter of the load information of the second NF is greater than a first reference value. The instruction, when executed by the at least one processor individually or collectively, may cause the device to determine whether a second parameter of the load information of the second NF is greater than a second reference value. The instruction, when executed by the at least one processor individually or collectively, may cause the device to, based on determining that the first parameter is greater than the first reference value or the second parameter is greater than the second parameter, determine a load state of the second NF as the first state.

According to an embodiment, the instruction, when executed by the at least one processor individually or collectively, may cause the device to determine a limitation ratio for changing the ratio from the first ratio to the second ratio, in case that the first parameter is greater than the first reference value and the second parameter is less than the second reference value. The limitation ratio may be determined according to a level of the first parameter.

According to an embodiment, the instructions, when executed by the at least one processor individually or collectively, may cause the device to obtain a first load value based on a first set of load information for the second NF before a reference timing among a plurality of time intervals. The instructions, when executed by the at least one processor individually or collectively, may cause the device to determine whether a difference between the first load value and a second load value obtained based on a second set of load information after the reference timing among the plurality of time intervals is greater than a reference difference. The instructions, when executed by the at least one processor individually or collectively, may cause the device to determine whether the second NF is in the first state using the load information of the second NF, in case that the difference is greater than the reference difference. The instructions, when executed by the at least one processor individually or collectively, may cause the device to, in case that the difference is less than the reference difference, obtain prediction load information of the second NF in a time interval after a timing at which the load information was obtained. The prediction load information may be obtained using an artificial intelligence model (AI model) based on the load information. The instructions, when executed by the at least one processor individually or collectively, may cause the device to determine whether the second NF is in the first state, using the prediction load information.

According to an embodiment, the AI model may include a recurrent neural network (RNN). The AI model may be trained based on a first portion of load information during a designated duration and location information corresponding to the first portion. The first set of load information and the second set of load information associated with the plurality of time intervals may be included in a second portion different from the first portion of load information during the designated duration.

According to an embodiment, the first load value may be predicted by using the AI model based on the first set of load information. The prediction load information may be predicted based on location information of a terminal (user equipment) to which a service is provided by the second NF and the load information.

According to an embodiment, the instructions, when executed by the at least one processor individually or collectively, may cause the device to obtain other load information for representing a load of each NF of another NF group including a fourth NF, based on determining that each of all NFs in the NF group is in the first state. The instructions, when executed by the at least one processor individually or collectively, may cause the device to determine whether each NF of the another NF group is in the first state, using the other load information. The instructions, when executed by the at least one processor individually or collectively, may cause the device to allocate at least a portion of the plurality of calls to the fourth NF, based on determining that the fourth NF is in the second state. The location information of the NF group may be different from other location information of the another NF group.

According to an embodiment, the location information of the NF group may indicate a first area including a location of a user equipment associated with at least the portion. The other location information of the another NF group may indicate a second area including the location. The first area may be closer to the location than the second area.

According to an embodiment, a size of the second area is greater than a size of the first area. The second area may include the first area.

According to an embodiment, the instructions, when executed by the at least one processor individually or collectively, may cause the device to detect that a load state of the second NF is changed from the first state to the second state, using load information obtained from the second NF, after allocating at least the portion of the plurality of calls to the fourth NF. The instructions, when executed by the at least one processor individually or collectively, may cause the device to allocate at least the portion to the second NF.

According to an embodiment, the first NF may include a session management function (SMF) or a network repository function (NRF). The NF group may include user plane functions (UPFs). In case that the second NF is a first UPF, the third NF may be a second UPF different from the first UPF.

As described above, a method performed by a device of a first network function (NF) may include obtaining load information for representing a load of each NF of a NF group including a second NF and a third NF. The method may include determining whether each NF of the NF group is in a first state representing an overload of a NF by using the load information. The method may include, based on determining that the second NF is in the first state and the third NF is in a second state different from the first state, changing a ratio between the second NF and the third NF for distributing a plurality of calls from a first ratio to a second ratio different from the first ratio. The method may include, based on the changed second ratio, allocating second calls to the second NF, the second calls being less than first calls according to the first ratio from among the calls, and allocating fourth calls to the third NF, the fourth calls being greater than third calls according to the first ratio from among the calls.

According to an embodiment, the method may include obtaining other load information for representing a load of each NF of another NF group including a fourth NF, based on determining that each of all NFs in the NF group is in the first state. The method may include determining whether each NF of the another NF group is in the first state, using the other load information. The method may include allocating at least a portion of the plurality of calls to the fourth NF, based on determining that the fourth NF is in the second state. The location information of the NF group may be different from other location information of the another NF group.

According to an embodiment, the location information of the NF group may indicate a first area including a location of a user equipment associated with at least the portion. The other location information of the another NF group may indicate a second area including the location. The first area may be closer to the location than the second area.

According to an embodiment, a size of the second area may be greater than a size of the first area. The second area may include the first area.

According to an embodiment, the method may include detecting that a load state of the second NF is changed from the first state to the second state, using load information obtained from the second NF, after allocating at least the portion of the plurality of calls to the fourth NF. The method may include allocating at least the portion to the second NF.

As described above, a non-transitory computer-readable storage medium may store one or more programs including instructions that, when executed individually or collectively by at least one processor of a device of a first network function (NF) including a transceiver, cause the device to obtain load information for representing a load of each NF of an NF group including a second NF and a third NF. The non-transitory computer-readable storage medium may store one or more programs including instructions that, when executed individually or collectively by the least one processor, cause the device to determine whether each NF of the NF group is in a first state representing an overload of the NF, using the load information. The non-transitory computer-readable storage medium may store one or more programs including instructions that, when executed individually or collectively by the least one processor, cause the device to, based on determining that the second NF is in the first state and the third NF is in a second state different from the first state, change a ratio between the second NF and the third NF for distributing a plurality of calls from a first ratio to a second ratio different from the first ratio. The non-transitory computer-readable storage medium may store one or more programs including instructions that, when executed individually or collectively by the least one processor, cause the device to, based on the changed second ratio, allocate second calls to the second NF, the second calls being less than first calls according to the first ratio from among the plurality of calls, and allocate fourth calls to the third NF, the fourth calls being greater than third calls according to the first ratio from among the plurality of calls.

The methods according to various embodiments described in the claims and/or specification of the disclosure may be implemented in hardware, software, or a combination of hardware and software.

In case of implementation as software, a computer-readable storage medium for storing one or more programs (software modules) may be provided. The one or more programs stored in the computer-readable storage medium are configured for execution by one or more processors in an electronic device. The one or more programs include instructions that cause the electronic device to execute the methods according to embodiments described in the claims or specifications of the disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs), other type of optical storage device, or a magnetic cassette. Alternatively, the program may be stored in a memory composed of a combination of some or all of those. In addition, a plurality of respective constituent memories may be included therein.

Further, the program may be stored in an attachable storage device that may be accessed through a communication network such as e.g., Internet, Intranet, local area network (LAN), wide area network (WAN), or storage area network (SAN), or a combination thereof. Such a storage device may be connected to a device performing an embodiment of the disclosure via an external port. Further, a separate storage device on the communication network may also access a device performing an embodiment of the disclosure.

In the above-described specific embodiments of the disclosure, an element included in the disclosure is expressed in a singular or plural form depending on a presented specific embodiment. However, the singular form or plural form is selected to better suit its presented situation for the convenience of description, and the disclosure is not limited to that singular element or the plural element presented, and even a component expressed in plural may be configured in a singular form, or even a component expressed in a singular form may be configured in a plural form.

According to embodiments, one or more of the above-described components may be omitted, or one or more other components may be added. Alternatively or additionally, a plurality of components e.g., modules or programs may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to specific embodiments thereof, it will be apparent that various changes and modifications are possible without departing form the scope of the disclosure.

## Claims

1. A device of a first network function (NF) comprising:
memory including instructions;
a transceiver; and
at least one processor;
wherein the instructions, when executed by the at least one processor individually or collectively, cause the device to:
obtain load information for representing a load of each NF of a NF group including a second NF and a third NF;
determine whether each NF of the NF group is in a first state representing an overload of a NF by using the load information;
based on determining that the second NF is in the first state and the third NF is in a second state different from the first state, change a ratio between the second NF and the third NF for distributing a plurality of calls from a first ratio to a second ratio different from the first ratio; and
based on the changed second ratio:
allocate second calls to the second NF, the second calls being less than first calls according to the first ratio from among the plurality of calls; and
allocate fourth calls to the third NF, the fourth calls being greater than third calls according to the first ratio from among the plurality of calls.

2. The device of claim 1,
wherein the load information of the second NF includes at least one of a factor associated with a service provided by the second NF, a user plane factor, or a control plane factor,
wherein the factor associated with the service includes:
a number of user equipment associated with the second NF, a number of protocol data unit (PDU) session, or a number of quality of service (QoS) flow, and
information representing a load of a central processing unit (CPU), memory, or disk of the second NF.

3. The device of claim 2,
wherein the user plane factor includes traffic, a packet drop rate, or internet protocol (IP) pool usage; and
wherein the control plane factor includes transaction per second (TPS) or information on a call.

4. The device of claim 1,
wherein NFs in the NF group have location information, and
wherein the location information includes tracking area indicator (TAI).

5. The device of claim 1,
wherein the instructions, when executed by the at least one processor individually or collectively, cause the device to:
determine whether a first parameter of the load information of the second NF is greater than a first reference value;
determine whether a second parameter of the load information of the second NF is greater than a second reference value; and
based on determining that the first parameter is greater than the first reference value or the second parameter is greater than the second parameter, determine a load state of the second NF as the first state.

6. The device of claim 5,
wherein the instructions, when executed by the at least one processor individually or collectively, cause the device to:
determine a limitation ratio for changing the ratio from the first ratio to the second ratio in case that the first parameter is greater than the first reference value and the second parameter is less than the second parameter,
wherein the limitation ratio is determined according to a level of the first parameter.

7. The device of claim 1,
wherein the instructions, when executed by the at least one processor individually or collectively, cause the device to:
obtain a first load value based on a first set of load information for the second NF before a reference timing in time intervals;
determine whether a difference between the first load value and a second load value obtained based on a second set of load information after the reference timing in the time intervals is greater than a reference difference;
determine whether the second NF is in the first state by using the load information of the second NF in case that the difference is greater than the reference difference;
in case that the difference is less than or equal to the reference difference:
obtain prediction load information of the second NF in a time interval after a timing at which the load information was obtained, wherein the prediction load information is obtained by using an artificial intelligence model (AI model) based on the load information, and
determine whether the second NF is in the first state by using the prediction load information.

8. The device of claim 7,
wherein the AI model includes a recurrent neural network (RNN),
wherein the AI model is trained based on a first portion of load information during a designated duration and location information corresponding to the first portion,
wherein the first set of load information and the second set of load information associated with the time intervals are included in a second portion different from the first portion of load information during the designated duration.

9. The device of claim 7,
wherein the first load value is predicted by using the AI model based on the first set of load information, and
wherein the prediction load information is predicted based on location information of a user equipment to which a service is provided by the second NF and the load information.

10. The device of claim 1,
wherein the instructions, when executed by the at least one processor individually or collectively, cause the device to:
obtain other load information for representing a load of each NF of another NF group including a fourth NF based on determining that each of all NFs in the NF group is in the first state;
determine whether each NF of the another NF group is in the first state by using the other load information; and
allocate at least a portion of the plurality of calls to the fourth NF based on determining that the fourth NF is in the second state,
wherein location information of the NF group is different from other location information of the another NF group.

11. The device of claim 10,
wherein the location information of the NF group indicates a first area including a location of a user equipment associated with at least the portion,
wherein the other location information of the another NF group indicates a second area including the location,
wherein the first area is closer to the location than the second area,
wherein a size of the second area is wider than a size of the first area, and
wherein the second area includes the first area.

12. The device of claim 10,
wherein the instructions, when executed by the at least one processor individually or collectively, cause the device to:
detect that a load state of the second NF is changed from the first state to the second state by using load information obtained from the second NF, after allocating at least the portion of the plurality of calls to the fourth NF; and
allocate at least the portion to the second NF.

13. The device of claim 1,
wherein the first NF includes a session management function (SMF) or a network repository function (NRF),
wherein the NF group includes user plane functions (UPFs), and
wherein the third NF, in case that the second NF is a first UPF, is a second UPF different from the first UPF.

14. A method performed by a device of a first network function (NF), the method comprising:
obtaining load information for representing a load of each NF of a NF group including a second NF and a third NF;
determining whether each NF of the NF group is in a first state representing an overload of a NF by using the load information;
based on determining that the second NF is in the first state and the third NF is in a second state different from the first state, changing a ratio between the second NF and the third NF for distributing a plurality of calls from a first ratio to a second ratio different from the first ratio; and
based on the changed second ratio:
allocating second calls to the second NF, the second calls being less than first calls according to the first ratio from among the calls; and
allocating fourth calls to the third NF, the fourth calls being greater than third calls according to the first ratio from among the calls.

15. A non-transitory computer-readable storage medium storing one or more programs, the one or more programs comprising instructions to, when executed by at least one processor of a device of a first network function (NF) comprising a transceiver individually or collectively, cause the device to:
obtain load information for representing a load of each NF of a NF group including a second NF and a third NF;
determine whether each NF of the NF group is in a first state representing an overload of a NF by using the load information;
based on determining that the second NF is in the first state and the third NF is in a second state different from the first state, change a ratio between the second NF and the third NF for distributing a plurality of calls from a first ratio to a second ratio different from the first ratio; and
based on the changed second ratio:
allocate second calls to the second NF, the second calls being less than first calls according to the first ratio from among the calls; and
allocate fourth calls to the third NF, the fourth calls being greater than third calls according to the first ratio from among the calls.
